# EUROPEAN PATENT APPLICATION

(11) **EP 4 301 013 A1**
(43) Date of publication of application: **03.01.2024**
(21) Application number: 22773985.1
(22) Date of filing: 25.02.2022
(51) Int. Cl.: H04W 4/70

(54) **COMMUNICATION METHOD, APPARATUS AND SYSTEM**

(30) Priority: 24.03.2021 CN 202110316331
(71) Applicant: Huawei Technologies Co., Ltd., Shenzhen, Guangdong 518129 (CN)
(72) Inventor: SUN, Fei, Shenzhen, Guangdong 518129 (CN); LUO, Haiyan, Shenzhen, Guangdong 518129 (CN)
(74) Representative: Thun, Clemens
(86) International application number: PCT/CN2022/078030
(87) International publication number: WO 2022/199323

(57) **Abstract**

This application provides a communication method, apparatus, and system, to meet different service requirements. The method includes: A relay terminal device receives a request message from a remote terminal device. The relay terminal device performs access control based on first slice information and second slice information. The relay terminal device sends a response message to the remote terminal device, where the request message is used to request to communicate with an access network device through the relay terminal device, the request message includes the first slice information, the first slice information includes information about a slice that the remote terminal device intends to access, and the second slice information includes information about a slice supported by a cell on which the relay terminal device currently camps or a cell that currently serves the relay terminal device.

## Description

This application claims priority to Chinese Patent Application No. 202110316331.6, filed with the China National Intellectual Property Administration on March 24, 2021 and entitled "COMMUNICATION METHOD, APPARATUS, AND SYSTEM", which is incorporated herein by reference in its entirety.

### TECHNICAL FIELD

This application relates to the communication field, and in particular, to a communication method, apparatus, and system.

### BACKGROUND

A device-to-device (device-to-device, D2D) communication (which may also be referred to as proximity service (proximity service, proSe)) technology is a technology of direct communication between two terminal devices, and may support short-range point-to-point communication between two or more terminal devices. For example, a remote terminal device may communicate with an access network device through a relay terminal device. The remote terminal device may be within a coverage area of the access network device, or may be outside a coverage area of the access network device. With development of a mobile communication technology, types of services are increasing continuously, and requirements of different services vary greatly. For example, there are requirements for a high bandwidth, a low latency, and high reliability. Therefore, it is difficult to meet different requirements of different services through a single network. Therefore, a customized network service may be provided for a user through a network slice (network slice), to meet different service requirements. However, a specific implementation remains to be studied.

### SUMMARY

Embodiments of this application provide a communication method, apparatus, and system, to meet different service requirements of D2D communication.

To achieve the foregoing objective, the following technical solutions are used in this application:
According to a first aspect, a communication method is provided. The communication method includes: A relay terminal device receives a request message from a remote terminal device, the relay terminal device performs access control based on first slice information and second slice information or performs access control based on the first slice information and third slice information, and the relay terminal device sends a response message to the remote terminal device. The request message is used to request to communicate with an access network device through the relay terminal device, the request message includes the first slice information, the first slice information includes information about a slice that the remote terminal device intends to access, the second slice information includes information about a slice supported by a cell on which the relay terminal device currently camps or a cell that currently serves the relay terminal device, and the third slice information includes information about a slice supported by the relay terminal device or information about an air interface capability corresponding to the relay terminal device.

This embodiment of this application provides a communication method. The relay terminal device receives, from the remote terminal device, the request message that includes the first slice information. The request message is used to request to communicate with the access network device through the relay terminal device, and the first slice information includes the information about the slice that the remote terminal device intends to access. In this way, the relay terminal device may perform access control based on the first slice information and the second slice information or perform access control based on the first slice information and the third slice information, and send the response message to the remote terminal device. The second slice information includes the information about the slice supported by the cell on which the relay terminal device currently camps or the cell that currently serves the relay terminal device, and the third slice information includes the information about the slice supported by the relay terminal device or the information about the air interface capability corresponding to the relay terminal device. Access control is performed based on a slice. Therefore, the communication method may be applied to a network slice service scenario, and may meet different service requirements.

In a possible design manner, that the relay terminal device performs access control based on first slice information and second slice information may include: The relay terminal device performs access control based on the first slice information, the second slice information, and the third slice information. In this way, the relay terminal device may determine, based on whether the slice supported by the cell on which the relay terminal device currently camps or the cell that currently serves the relay terminal device, and the information about the slice supported by the relay terminal device or the information about the air interface capability corresponding to the relay terminal device include or support the slice that the remote terminal device intends to access, whether the remote terminal device can enjoy the slice service, to meet different service requirements.

In a possible design manner, that the relay terminal device performs access control based on the first slice information and third slice information may include: The relay terminal device performs access control based on the first slice information, the second slice information, and the third slice information. Therefore, performing access control based on a slice may be applied to a network slice service scenario, and may meet different service requirements.

In a possible design manner, the third slice information may further include information about a slice corresponding to an on-going protocol data unit (protocol data unit, PDU) session of the relay terminal device.

In this way, the relay terminal device can complete data transmission without a need to re-establish a PDU session for the remote terminal device, to reduce an access latency of the remote terminal device.

In a possible design manner, the third slice information may further include information about a slice corresponding to a suspended PDU session of the relay terminal device.

In this way, the relay terminal device can quickly restore from an inactive mode to a connected mode, and the suspended PDU session can be quickly restored to perform data transmission, to reduce an access latency of the remote terminal device.

In a possible design manner, the communication method provided in the first aspect may further include: If the cell on which the relay terminal device currently camps does not support the slice that the remote terminal device intends to access, the relay terminal device reselects a cell that supports the slice that the remote terminal device intends to access.

In this way, the relay terminal device may reselect the cell that supports the slice that the remote terminal device intends to access, to allow the remote terminal device to communicate with the access network device through the relay terminal device, and extend a network slice service range.

In a possible design manner, the communication method provided in the first aspect may further include: If the cell that currently serves the relay terminal device does not support the slice that the remote terminal device intends to access, the relay terminal device sends, to the access network device, information about a cell that supports the slice that the remote terminal device intends to access.

Optionally, the information about the cell that supports the slice that the remote terminal device intends to access may be sent by using a measurement report, and the measurement report includes the information about the cell that supports the slice that the remote terminal device intends to access.

In this way, the relay terminal device may access, through dual connectivity, carrier aggregation, or a handover, the cell that supports the slice that the remote terminal device intends to access, so that the remote terminal device is allowed to communicate with the access network device through the relay terminal device, and processes such as a process of forbidding the remote terminal device from communicating with the access network device through the relay terminal device and a process in which the remote terminal device resends the request message are avoided, to reduce an access latency of the remote terminal device.

In a possible design manner, the communication method provided in the first aspect may further include: The relay terminal device sends the second slice information and/or the third slice information.

Optionally, the relay terminal device may announce, multicast, or unicast the second slice information and/or the third slice information through a logical interface between the remote terminal device and the relay terminal device, and the remote terminal device may receive the second slice information and/or the third slice information through the logical interface. When sending is performed through multicast or announcing, signaling overheads can be reduced.

In a possible design manner, the communication method provided in the first aspect may further include: The relay terminal device sends configuration information of a resource pool corresponding to the third slice information and/or configuration information of a resource pool corresponding to the second slice information. In this way, the remote terminal device can enjoy the slice service based on the configuration information of the resource pool corresponding to the third slice information and/or the configuration information of the resource pool corresponding to the second slice information.

Optionally, the relay terminal device may announce, multicast, or unicast, through the logical interface between the remote terminal device and the relay terminal device, the configuration information of the resource pool corresponding to the third slice information and/or the configuration information of the resource pool corresponding to the second slice information. The remote terminal device may receive, through the logical interface, the configuration information of the resource pool corresponding to the third slice information and/or the configuration information of the resource pool corresponding to the second slice information. When sending is performed through multicast or announcing, signaling overheads can be reduced.

Optionally, the response message may be sent by the relay terminal device to the remote terminal device after the relay terminal device performs access control based on the first slice information, the second slice information, and/or the third slice information. The response message may indicate that the remote terminal device is allowed to communicate with the access network device through the relay terminal device.

According to a second aspect, a communication method is provided. The communication method includes: A remote terminal device sends a request message, and the remote terminal device receives a response message from a relay terminal device. The request message is used to request to communicate with an access network device through the relay terminal device, the request message includes first slice information, and the first slice information includes information about a slice that the remote terminal device intends to access.

This embodiment of this application provides a communication method. The remote terminal device sends information that includes the slice that the remote terminal device intends to access, to request to communicate with the access network device through the relay terminal device. Such a request is based on a slice. Therefore, the communication method may be applied to a network slice service scenario, so that the remote terminal device can enjoy a network slice service, and different service requirements can be met.

Optionally, that a remote terminal device sends a request message may include: The remote terminal device sends the request message to the relay terminal device, or the remote terminal device announces the request message.

For example, the remote terminal device may announce the request message through a logical interface (for example, a PC5 interface) between the remote terminal device and the relay terminal device.

In a possible design manner, the communication method provided in the second aspect may further include: The remote terminal device receives second slice information and/or third slice information from the relay terminal device. The second slice information may include information about a slice supported by a cell on which the relay terminal device currently camps or a cell that currently serves the relay terminal device, and the third slice information may include information about a slice supported by the relay terminal device or information about an air interface capability corresponding to the relay terminal device.

In a possible design manner, the third slice information may further include information about a slice corresponding to an on-going PDU session of the relay terminal device.

In this way, the remote terminal device may choose to send the request message to a relay terminal device whose on-going PDU session corresponds to a slice that includes the slice that the remote terminal device intends to access, to reduce an access latency of the remote terminal device.

In a possible design manner, the third slice information may further include information about a slice corresponding to a suspended PDU session of the relay terminal device.

In a possible design manner, that a remote terminal device sends a request message may include: The remote terminal device sends the request message to the relay terminal device with reference to the third slice information and/or the second slice information. For example, after determining that the slice supported by the cell on which the relay terminal device currently camps or the cell that currently serves the relay terminal device includes the slice that the remote terminal device intends to access, the remote terminal device may send, to the relay terminal device, the information about the slice that the remote terminal device intends to access, to increase a success rate of requesting to communicate with the access network device through the relay terminal device, and reduce signaling overheads.

In a possible design manner, the communication method provided in the second aspect may further include: The remote terminal device communicates with the access network device through the relay terminal device. In this way, the remote terminal device can enjoy the slice service.

Optionally, the response message may indicate that the remote terminal device is forbidden from communicating with the access network device through the relay terminal device.

In this way, the remote terminal device may not select the relay terminal device to communicate with the access network device, and then select another proper relay terminal device to communicate with the access network device, so that the remote terminal device can enjoy the slice service.

In addition, for a technical effect of the communication method in the second aspect, refer to the technical effect of the communication method according to the first aspect. Details are not described herein again.

According to a third aspect, a communication method is provided. The communication method includes: A terminal device receives configuration information, and performs D2D communication based on configuration information of a resource pool corresponding to a slice that the terminal device intends to access. The configuration information of the resource pool corresponding to the slice that the terminal device intends to access is determined based on the configuration information and the slice that the terminal device intends to access, the configuration information includes the configuration information of the resource pool and a corresponding slice identifier, and the slice identifier corresponds to one or more slices.

This embodiment of this application provides a communication method. The terminal device receives the configuration information that includes the configuration information of the resource pool and the corresponding slice identifier, and determines, from the configuration information based on an identifier of the slice that the terminal device intends to access, the configuration information of the resource pool corresponding to the slice that the terminal device intends to access. In this way, D2D communication can be performed based on the configuration information of the resource pool corresponding to the slice that the terminal device intends to access, so that the terminal device can enjoy a slice service, and a service range of a network slice can be extended. In addition, the slice identifier corresponds to one or more slices. When the slice identifier corresponds to a plurality of slices, signaling overheads can be reduced.

In a possible design manner, the configuration information of the resource pool may include configuration information of at least two resource pools, the configuration information may include priority information, and the priority information may indicate priorities corresponding to the configuration information of the at least two resource pools. That a terminal device performs D2D communication based on configuration information of a resource pool corresponding to a slice that the terminal device intends to access may include: The terminal device selects, based on the priority information, configuration information of a first resource pool from the configuration information of the resource pool corresponding to the slice that the terminal device intends to access, to perform D2D communication.

In other words, the terminal device may select configuration information of a resource pool with a higher priority from the configuration information of the resource pool corresponding to the slice that the terminal device intends to access, to perform D2D communication.

In a possible design manner, the priority information may include a ranking sequence of the configuration information of the resource pool in the configuration information.

For example, configuration information of a resource pool ranked at a first location has a highest priority, and priorities are in descending order; or configuration information of a resource pool ranked at a first location has a lowest priority, and priorities are in ascending order.

In a possible design manner, that a terminal device receives configuration information may include: The terminal device receives configuration information from an access network device; or receives configuration information from a relay terminal device; or receives configuration information from a core network element; or receives configuration information from operation, administration, and maintenance (operation, administration, and maintenance, OAM). The relay terminal device is used by the terminal device to communicate with the access network device through the relay terminal device. In this way, the terminal device may receive the configuration information regardless of whether the terminal device is within a network coverage area or outside a network coverage area. When the terminal device is outside the network coverage area, the relay terminal device may send the configuration information to the terminal device.

According to a fourth aspect, a communication method is provided. The communication method includes: A network device determines configuration information, and sends the configuration information to a terminal device. The configuration information includes configuration information of a resource pool and a corresponding slice identifier, and the slice identifier corresponds to one or more slices.

In a possible design manner, the configuration information of the resource pool may include configuration information of at least two resource pools, the configuration information may include priority information, and the priority information may indicate priorities corresponding to the configuration information of the at least two resource pools.

In a possible design manner, the priority information may include a ranking sequence of the configuration information of the resource pool in the configuration information.

It should be noted that, the network device determines that the configuration information may be optional.

In a possible design manner, the network device may include an access network device, a relay terminal device, a core network element, or operation, administration, and maintenance OAM. The relay terminal device may be used by the terminal device to communicate with the access network device through the relay terminal device.

In addition, for a technical effect of the communication method in the fourth aspect, refer to the technical effect of the communication method according to the third aspect. Details are not described herein again.

According to a fifth aspect, a communication apparatus is provided. The communication apparatus includes a receiving module, a sending module, and a processing module. The receiving module is configured to receive a request message from a remote terminal device. The request message is used to request to communicate with an access network device through the communication apparatus, the request message includes first slice information, and the first slice information includes information about a slice that the remote terminal device intends to access. The processing module is configured to: perform access control based on the first slice information and second slice information, or perform access control based on the first slice information and third slice information. The second slice information includes information about a slice supported by a cell on which the communication apparatus currently camps or a cell that currently serves the communication apparatus, and the third slice information may include information about a slice supported by the communication apparatus or information about an air interface capability corresponding to the communication apparatus. The sending module is configured to send a response message to the remote terminal device.

In a possible design manner, the processing module is further configured to perform access control based on the first slice information, the second slice information, and the third slice information.

In a possible design manner, the third slice information may further include information about a slice corresponding to an on-going protocol data module PDU session of the communication apparatus.

In a possible design manner, the third slice information may further include information about a slice corresponding to a suspended PDU session of the communication apparatus.

In a possible design manner, if the cell on which the communication apparatus currently camps does not support the slice that the remote terminal device intends to access, the processing module is further configured to reselect a cell that supports the slice that the remote terminal device intends to access.

In a possible design manner, if the cell that currently serves the communication apparatus does not support the slice that the remote terminal device intends to access, the sending module is further configured to send, to the access network device, information about a cell that supports the slice that the remote terminal device intends to access.

Optionally, the information about the cell that supports the slice that the remote terminal device intends to access may be sent by using a measurement report, and the measurement report includes the information about the cell that supports the slice that the remote terminal device intends to access.

In a possible design manner, the sending module is further configured to send the third slice information and/or the second slice information.

In a possible design manner, the sending module is further configured to send configuration information of a resource pool corresponding to the third slice information and/or configuration information of a resource pool corresponding to the second slice information.

It should be noted that, the receiving module and the sending module may be disposed separately, or may be integrated into one module, namely, a transceiver module. Specific implementations of the receiving module and the sending module are not specifically limited in this application.

Optionally, the communication apparatus in the fifth aspect may further include a storage module, and the storage module stores a program or instructions. When the processing module executes the program or the instructions, the communication apparatus in the fifth aspect can perform the method in the first aspect.

It should be noted that, the communication apparatus in the fifth aspect may be a relay terminal device, or may be a chip (system) or another part or component that may be disposed in the relay terminal device. This is not limited in this application.

In addition, for a technical effect of the communication apparatus in the fifth aspect, refer to the technical effect of the communication method in any possible implementation of the first aspect. Details are not described herein again.

According to a sixth aspect, a communication apparatus is provided. The apparatus includes a receiving module and a sending module. The sending module is configured to send a request message. The request message is used to request to communicate with an access network device through a relay terminal device, the request message includes first slice information, and the first slice information includes information about a slice that the communication apparatus intends to access. The receiving module is configured to receive a response message from the relay terminal device.

In a possible design manner, the receiving module is further configured to receive second slice information and/or third slice information from the relay terminal device. The second slice information may include information about a slice supported by a cell on which the relay terminal device currently camps or a cell that currently serves the relay terminal device, and the third slice information may include information about a slice supported by the relay terminal device or information about an air interface capability corresponding to the relay terminal device.

In a possible design manner, the third slice information may further include information about a slice corresponding to an on-going protocol data module PDU session of the relay terminal device.

In a possible design manner, the third slice information may further include information about a slice corresponding to a suspended PDU session of the relay terminal device.

In a possible design manner, the communication apparatus in the sixth aspect may further include a processing module. The processing module is configured to control, based on the third slice information and/or the second slice information, the sending module to send the request message to the relay terminal device.

In a possible design manner, the processing module may be further configured to communicate with the access network device through the relay terminal device.

It should be noted that, the receiving module and the sending module in the sixth aspect may be disposed separately, or may be integrated into one module, namely, a transceiver module. Specific implementations of the receiving module and the sending module are not specifically limited in this application.

Optionally, the communication apparatus in the sixth aspect may further include a storage module, and the storage module stores a program or instructions. When the processing module executes the program or the instructions, the communication apparatus in the sixth aspect can perform the method in the second aspect.

It should be noted that, the communication apparatus in the sixth aspect may be a remote terminal device, or may be a chip (system) or another part or component that may be disposed in the remote terminal device. This is not limited in this application.

In addition, for a technical effect of the communication apparatus in the sixth aspect, refer to the technical effect of the communication method in any possible implementation of the second aspect. Details are not described herein again.

According to a seventh aspect, a communication apparatus is provided. The communication apparatus includes a receiving module and a processing module. The receiving module is configured to receive configuration information. The processing module is configured to perform D2D communication based on configuration information of a resource pool corresponding to a slice that the communication apparatus intends to access. The configuration information of the resource pool corresponding to the slice that the communication apparatus intends to access is determined based on the configuration information and the slice that the communication apparatus intends to access. The configuration information includes the configuration information of the resource pool and a corresponding slice identifier, and the slice identifier corresponds to one or more slices.

In a possible design manner, the configuration information of the resource pool may include configuration information of at least two resource pools, the configuration information may include priority information, and the priority information may indicate priorities corresponding to the configuration information of the at least two resource pools. The processing module may be further configured to select, based on the priority information, configuration information of a first resource pool from the configuration information of the resource pool corresponding to the slice that the communication apparatus intends to access, to perform D2D communication.

In a possible design manner, the priority information may include a ranking sequence of the configuration information of the resource pool in the configuration information.

In a possible design manner, the receiving module is further configured to receive configuration information from an access network device. Alternatively, the receiving module is further configured to receive configuration information from a relay terminal device. The relay terminal device is used by the communication apparatus to communicate with the access network device through the relay terminal device. Alternatively, the receiving module is further configured to receive configuration information from a core network element. Alternatively, the receiving module is further configured to receive configuration information from operation, administration, and maintenance OAM.

It should be noted that, the communication apparatus in the seventh aspect may further include a sending module. The sending module is configured to send data and/or signaling to the relay terminal device or the access network device. The receiving module and the sending module may be disposed separately, or may be integrated into one module, namely, a transceiver module. A specific implementation of the transceiver module is not specifically limited in this application.

Optionally, the communication apparatus in the seventh aspect may further include a storage module, and the storage module stores a program or instructions. When the processing module executes the program or the instructions, the communication apparatus in the seventh aspect can perform the method in the third aspect.

It should be noted that, the communication apparatus in the seventh aspect may be a terminal device, for example, a relay terminal device or a remote terminal device, or may be a chip (system) or another part or component that may be disposed in the terminal device. This is not limited in this application.

In addition, for a technical effect of the communication apparatus in the seventh aspect, refer to the technical effect of the communication method in any possible implementation of the third aspect. Details are not described herein again.

According to an eighth aspect, a communication apparatus is provided. The communication apparatus includes a processing module and a sending module. The processing module is configured to determine configuration information. The sending module is configured to send configuration information to a terminal device. The configuration information includes configuration information of a resource pool and a corresponding slice identifier, and the slice identifier corresponds to one or more slices.

In a possible design manner, the configuration information of the resource pool may include configuration information of at least two resource pools, the configuration information may include priority information, and the priority information may indicate priorities corresponding to the configuration information of the at least two resource pools.

In a possible design manner, the priority information may include a ranking sequence of the configuration information of the resource pool in the configuration information.

It should be noted that, the processing module may be optional. Determining the configuration information may be an optional function of the communication apparatus.

In a possible design manner, the communication apparatus may include an access network device, a relay terminal device, a core network element, or operation, administration, and maintenance OAM. The relay terminal device may be used by the terminal device to communicate with the access network device through the relay terminal device.

It should be noted that, the communication apparatus in the eighth aspect may further include a receiving module. The receiving module is configured to receive data and/or signaling from the terminal device. The receiving module and the sending module may be disposed separately, or may be integrated into one module, namely, a transceiver module. A specific implementation of the transceiver module is not specifically limited in this application.

Optionally, the communication apparatus in the eighth aspect may further include a storage module, and the storage module stores a program or instructions. When the processing module executes the program or the instructions, the communication apparatus in the eighth aspect can perform the method in the fourth aspect.

It should be noted that, the communication apparatus in the eighth aspect may be a network device, for example, an access network device, a relay terminal device, a core network element, or operation, administration, and maintenance OAM, or may be a chip (system) or another part or component that may be disposed in the network device. This is not limited in this application.

In addition, for a technical effect of the communication apparatus in the eighth aspect, refer to the technical effect of the communication method in any possible implementation of the fourth aspect. Details are not described herein again.

According to a ninth aspect, a communication apparatus is provided. The communication apparatus includes a processor, the processor is coupled to a memory, and the memory is configured to store a computer program. The processor is configured to execute the computer program stored in the memory, so that the communication method in any possible implementation of the first aspect to the fourth aspect is performed.

In a possible design, the communication apparatus in the ninth aspect may further include a transceiver. The transceiver may be a transceiver circuit or an input/output port. The transceiver may be used by the communication apparatus to communicate with another device.

In this application, the communication apparatus in the ninth aspect may be a terminal device, a network device, or a chip or a chip system disposed inside the terminal device or the network device.

In addition, for a technical effect of the communication apparatus in the ninth aspect, refer to the technical effect of the communication method in any possible implementation of the first aspect to the fourth aspect. Details are not described herein again.

According to a tenth aspect, a communication system is provided. The communication system includes the communication apparatus in any one of the fifth aspect and the possible design manners of the fifth aspect and the communication apparatus in any one of the sixth aspect and the possible design manners of the sixth aspect.

According to an eleventh aspect, a communication system is provided. The communication system includes the communication apparatus in any one of the seventh aspect and the possible design manners of the seventh aspect and the communication apparatus in any one of the eighth aspect and the possible design manners of the eighth aspect.

According to a twelfth aspect, a chip system is provided. The chip system includes a processor and an input/output port, the processor is configured to implement the processing function in the first aspect to the fourth aspect, and the input/output port is configured to implement a transceiver function in the first aspect to the fourth aspect.

In a possible design, the chip system further includes a memory, and the memory is configured to store program instructions and data for implementing functions in the first aspect to the fourth aspect.

The chip system may include a chip, or may include a chip and another discrete component.

According to a thirteenth aspect, a computer-readable storage medium is provided, including a computer program or instructions. When the computer program or instructions are run on a computer, the communication method in any possible implementation of the first aspect to the fourth aspect is performed.

According to a fourteenth aspect, a computer program product is provided, including a computer program or instructions. When the computer program or the instructions are run on a computer, the communication method in any possible implementation of the first aspect to the fourth aspect is performed.

### BRIEF DESCRIPTION OF DRAWINGS

FIG. 1 is a schematic diagram of an architecture of a communication system according to an embodiment of this application;
FIG. 2 is a schematic diagram of a network coverage scenario according to an embodiment of this application;
FIG. 3 is a schematic flowchart of a communication method according to an embodiment of this application;
FIG. 4 is a schematic flowchart of another communication method according to an embodiment of this application;
FIG. 5 is a diagram of an architecture of a protocol stack according to an embodiment of this application;
FIG. 6 is a diagram of an architecture of another protocol stack according to an embodiment of this application;
FIG. 7 is a diagram of an architecture of still another protocol stack according to an embodiment of this application;
FIG. 8 to FIG. 14 each are a schematic flowchart of still another communication method according to an embodiment of this application;
FIG. 15 is a schematic diagram of a structure of a communication apparatus according to an embodiment of this application; and
FIG. 16 is a schematic diagram of a structure of another communication apparatus according to an embodiment of this application.

### DESCRIPTION OF EMBODIMENTS

The following describes technical solutions of this application with reference to accompanying drawings.

The technical solutions in embodiments of this application may be applied to various communication systems such as a wireless fidelity (wireless fidelity, Wi-Fi) system, a vehicle-to-everything (vehicle-to- everything, V2X) communication system, a device-to-device (device-to-device, D2D) communication system, an Internet of vehicles communication system, a 4th generation (4th generation, 4G) mobile communication system, for example, a long term evolution (long term evolution, LTE) system, a 5th generation (5th generation, 5G) mobile communication system, for example, a new radio (new radio, NR) system, and a future communication system, for example, a sixth generation (6th generation, 6G) mobile communication system.

Various aspects, embodiments, or features are presented in this application by describing a system that may include a plurality of devices, components, modules, and the like. It should be appreciated and understood that each system may include another device, component, module, and the like, and/or may not include all devices, components, modules, and the like discussed with reference to the accompanying drawings. In addition, a combination of these solutions may be further used.

In addition, in embodiments of this application, the word such as "example" or "for example" is used to represent giving an example, an illustration, or a description. Any embodiment or design scheme described as an "example" in this application should not be explained as being more preferred or having more advantages than another embodiment or design scheme. Exactly, the term "example" presents a concept in a specific manner.

In embodiments of this application, "information (information)", "signal (signal)", "message (message)", and "signaling (signaling)" may be interchangeably used sometimes. It should be noted that, expressed meanings are the same when a difference is not emphasized. "Of (of)", "corresponding (corresponding, related)", and "corresponding (corresponding)" may be interchangeably used sometimes. It should be noted that, expressed meanings are the same when a difference is not emphasized.

A network architecture and a service scenario described in embodiments of this application are intended to describe the technical solutions in embodiments of this application more clearly, and do not constitute a limitation on the technical solutions provided in embodiments of this application. A person of ordinary skill in the art may learn that, with evolution of the network architecture and emergence of a new service scenario, the technical solutions provided in embodiments of this application are also applicable to a similar technical problem.

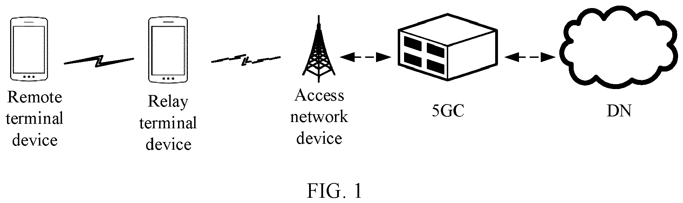

For ease of understanding of embodiments of this application, a communication system applicable to embodiments of this application is first described in detail by using a communication system shown in FIG. 1 as an example. For example, FIG. 1 is a schematic diagram of an architecture of a communication system to which a communication method is applicable according to an embodiment of this application.

As shown in FIG. 1, the communication system includes a relay terminal device and a remote terminal device. Optionally, the communication system may further include an access network device.

The relay terminal device (proximity service UE-to-network relay) may be configured to support the remote terminal device to be connected to a network. For example, the relay terminal device may be a terminal device, or an integrated access and backhaul (integrated access and backhaul, IAB) node. The integrated access and backhaul (integrated access and backhaul, IAB) node includes a mobile terminal (mobile terminal, MT) or a distributed unit (distributed unit, DU). The remote terminal device may be a terminal device that supports 5G ProSe, and can communicate with a data network (data network, DN) through the relay terminal device. The terminal device is a terminal that accesses the communication system and has a wireless transceiver function, or a chip or a chip system that may be disposed in the terminal. The terminal device may also be referred to as a user apparatus, an access terminal, a subscriber unit, a subscriber station, a mobile station, a mobile console, a remote station, a remote terminal, a mobile device, a user terminal, a terminal, a wireless communication device, a user agent, or a user apparatus. The terminal device in this embodiment of this application may be a mobile phone (mobile phone), a tablet computer (pad), a computer having a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (telemedicine), a wireless terminal in smart grid (smart grid), a wireless terminal in transportation safety (transportation safety), a wireless terminal in smart city (smart city), a wireless terminal in smart home (smart home), a vehicle-mounted terminal, an RSU having a terminal function, or the like. The terminal device in this application may alternatively be a vehicle-mounted module, a vehicle-mounted assembly, a vehicle-mounted part, a vehicle-mounted chip, or a vehicle-mounted unit built in a vehicle as one or more parts or units. The vehicle may implement the communication method provided in this application by using the built-in vehicle-mounted module, the vehicle-mounted assembly, the vehicle-mounted part, the vehicle-mounted chip, or the vehicle-mounted unit.

The access network device is a device that is located on a network side of the communication system and that has a wireless transceiver function, or a chip or a chip system that may be disposed in the device. The access network device includes but is not limited to an access point (access point, AP), for example, a home gateway, a router, a server, a switch, or a bridge, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless relay node, a wireless backhaul node, a transmission point (transmission and reception point, TRP, or transmission point, TP), or the like in a wireless fidelity (wireless fidelity, Wi-Fi) system; or may be a gNB or a transmission point (TRP or TP) in a 5G system, for example, a new radio (new radio, NR) system, one or a group of antenna panels (including a plurality of antenna panels) of a base station in the 5G system, or may be a network node constituting a gNB or a transmission point, for example, a baseband unit (BBU), a distributed unit (distributed unit, DU), or a roadside unit (roadside unit, RSU) having a base station function.

Optionally, the communication system may further include a 5G core network (5th generation core, 5GC). The 5GC may include a user plane function (user plane function, UPF) network element, a session management function (session management function, SMF) network element, a policy control function (policy control function, PCF) network element, a mobility management function (access and mobility management function, AMF) network element, an application function (application function, AF) network element, a network slice selection function (network slice selection function, NSSF) network element, an authentication server function (authentication server function, AUSF) network element, a unified data management (unified data management, UDM) network element, and/or the like. This is not specifically limited in this embodiment of this application.

It should be noted that, the communication method provided in this embodiment of this application may be applied to the remote terminal device and the relay terminal device shown in FIG. 1, the relay terminal device and the access network device, the relay terminal device and the 5GC, and the like. The access network device and the 5GC each may be referred to as a network device. For a specific implementation, refer to the following method embodiments. Details are not described herein again. Names of the remote terminal device and the relay terminal device shown in FIG. 1 are not limited in this application. For example, the remote terminal device may be referred to as an initiation terminal device, and the relay terminal device may be referred to as a target terminal device, provided that a corresponding function can be implemented.

It should be noted that the solution in this embodiment of this application may be further applied to another communication system, and a corresponding name may alternatively be replaced with a name of a corresponding function in the another communication system.

It should be understood that, FIG. 1 is merely a simplified schematic diagram of an example for ease of understanding. The communication system may further include another network device and/or another terminal device, which are/is not shown in FIG. 1.

To describe embodiments of this application more clearly, the following some content and concepts related to embodiments of this application are described herein in a unified manner.

### 1. Single network slice selection assistance information

The single network slice selection assistance information (single network slice selection assistance information, S-NSSAI) may identify a specific network slice.

The S-NSSAI may include slice/service type (slice/service type, SST). Optionally, the S-NSSAI may further include a slice differentiator (slice differentiator, SD).

The SST points to a slice-specific feature and a service type.

The SD is optional information for supplementing the SST, to distinguish between a plurality of network slices with a same SST.

### 2. Information about a slice intended (intended) to be accessed

The slice intended to be accessed may be an intended slice, a requested (requested) slice (for example, the following requested NSSAI), or a slice associated with a to-be-initiated service. The information about the slice intended to be accessed may have different meanings in different cases. For example, in a case of cell selection or reselection, the information about the slice intended to be accessed may be an allowed S-NSSAI or a requested S-NSSAI. For another example, when initial registration is performed and S-NSSAI is requested, the information about the slice intended to be accessed may be the requested S-NSSAI (or may be referred to as requested NSSAI). For another example, for a terminal device in an idle mode, the information about the slice intended to be accessed may be the allowed S-NSSAI (or may be referred to as allowed NSSAI). For another example, when the terminal device initiates a call service, the information about the slice intended to be accessed may be a slice indication that is from a NAS stratum to an access stratum (access stratum, AS) and that is associated with the call service initiated by the terminal device. For another example, when the terminal device is called, the terminal device may not learn of a slice associated with a paging service.

### (1) Requested NSSAI

Network slice selection assistance information (network slice selection assistance information, NSSAI) is a set of S-NSSAI. The NSSAI may include configured (configured) NSSAI, requested (requested) NSSAI, subscribed (subscribed) S-NSSAI, and allowed (allowed) NSSAI.

The requested NSSAI may indicate a slice that the terminal device requests to access, and may be determined by the terminal device based on parameters such as default configured NSSAI, configured NSSAI, allowed NSSAI, or allowed NSSAI and NSSAI in configured S-NSSAI that is not included in the allowed NSSAI.

For example, if the terminal device does not have allowed NSSAI or configured NSSAI in a current PLMN, the terminal device may determine the requested NSSAI based on the default configured NSSAI.

For example, if the terminal device has configured NSSAI of a current PLMN in the PLMN, the terminal device may determine the requested NSSAI based on the configured NSSAI.

For example, if the terminal device has allowed NSSAI of a current PLMN in the PLMN, the terminal device may determine the requested NSSAI based on the allowed NSSAI.

For example, although the terminal device once accesses a current PLMN and receives allowed NSSAI of the PLMN, the terminal device may request new configured S-NSSAI (allowed NSSAI and configured S-NSSAI that is not included in the allowed NSSAI) in the PLMN.

### (2) Configured NSSAI

The configured NSSAI may be NSSAI configured by the network device for the terminal device for use. The terminal device may obtain, based on the configured NSSAI, S-NSSAI that can be used within a coverage area of the network device.

For example, the configured NSSAI may include home public land mobile network (home public land mobile network, HPLMN) configured NSSAI, visited public land mobile network (visited public land mobile network, VPLMN) configured NSSAI, default (default) configured NSSAI, and a mapping relationship between configured NSSAI and HPLMN S-NSSAI.

Specifically, the HPLMN configured NSSAI may include HPLMN S-NSSAI (which may be subscribed (subscribed) S-NSSAI). In an HPLMN, the terminal device may access a network based on the HPLMN configured NSSAI.

VPLMN configured NSSAI: In a VPLMN, the terminal device accesses a network based on the VPLMN configured NSSAI.

The default configured NSSAI may be S-NSSAI whose value is defined in a standard. When the terminal device is in the VPLMN but does not have the VPLMN configured NSSAI, the terminal device accesses a network based on the default configured NSSAI.

Mapping relationship between configured NSSAI and HPLMN S-NSSAI: A network slice selection policy (network slice selection policy, NSSP) may include a correspondence between an application (application, APP) and HPLMN S-NSSAI. The mapping relationship between configured NSSAI and HPLMN S-NSSAI may be used to assist the terminal device to obtain corresponding configured NSSAI based on the app, so that a subsequent registration request includes a new configured NSSAI.

For example, accessing a network may mean that the terminal device constructs the requested (requested) NSSAI based on the configured NSSAI.

### (3) Allowed NSSAI

The allowed NSSAI indicates a slice that the network device allows the terminal device to use, and the allowed NSSAI is valid within a registration area range of the terminal device. In other words, when allocating a tracking area (tracking area, TA), the network device needs to consider availability of a slice (availability of slice). When a serving PLMN of the terminal device is a VPLMN, the network device may send a mapping relationship between VPLMN allowed S-NSSAI (VPLMN allowed S-NSSAI) and HPLMN S-NSSAI to the terminal device.

Mapping relationship between allowed NSSAI and HPLMN S-NSSAI (mapping of allowed NSSAI to HPLMN S-NSSAI): The NSSP may include the correspondence between an app and HPLMN S-NSSAI, and the mapping relationship between allowed NSSAI and HPLMN S-NSSAI may be used to assist the terminal device to obtain corresponding allowed NSSAI based on the app, so that the corresponding allowed NSSAI is used for a subsequent PDU session request.

### 3. Slice supported by a relay terminal device and air interface capability corresponding to the relay terminal device

The relay terminal device communicates with an access network device through an air interface. The air interface capability is mainly radio capability information of the terminal device (UE radio capability information), including capability information and a parameter that are related to a radio access technology (radio access technology, RAT) supported by the terminal device, for example, a frequency range supported by the terminal device, where some slices may be deployed only on a specific frequency; for another example, whether a mini slot (mini slot) is supported. The mini slot is specifically explained as follows: A slot is a standard scheduling unit in a 5G (NR) network. In the 5G (NR) network, data transmission may start from any orthogonal frequency division multiplexing (orthogonal frequency division multiplexing, OFDM) symbol to a last OFDM symbol required for maintaining communication. The mini slot facilitates low-latency data communication, to minimize interference in another radio frequency link, and help reduce a latency. There is no fixed relationship between the mini slot and a frame structure, and the mini slot can be directly scheduled without waiting time polling or being limited by the frame structure.

Specifically, it may be learned, based on the slice supported by the relay terminal device, that the air interface capability corresponding to the relay terminal device definitely supports the slice, and the relay terminal device has subscribed to the slice.

For example, if the relay terminal device supports a slice 1, it indicates that the air interface capability corresponding to the relay terminal device definitely supports the slice 1 (for example, the relay terminal device supports an air interface physical layer capability required by the slice 1), and the relay terminal device subscribes to the slice 1.

The air interface capability may include a slice supported by an air interface. It may be learned, from a slice supported by the air interface capability corresponding to the relay terminal device, that the relay terminal device may support an air interface capability required by the slice, but the relay terminal device does not definitely support the slice. Whether the relay terminal device supports the slice is further related to whether the relay terminal device subscribes to the slice.

For example, if the air interface capability corresponding to the relay terminal device supports a slice 2, it indicates that the relay terminal device may support an air interface capability required by the slice 2. If the relay terminal device subscribes to the slice 2, it indicates that the relay terminal device supports the slice 2; or if the relay terminal device does not subscribe to the slice 2, the relay terminal device does not support the slice 2.

### 4. D2D communication

Core functions of D2D communication include a discovery (discovery) function and a communication (communication) function, for example, Bluetooth, or Wi-Fi direct (direct). In a protocol, ProSe usually represents D2D communication.

Discovery function: Terminal devices with a proximity service function discover each other in adjacent areas based on an evolved universal terrestrial radio access network (evolved universal terrestrial radio access network, E-UTRAN) (optional), a wireless local area network (wireless local area network, WLAN) technology, or an evolved packet core (evolved packet core, EPC).

Communication function: ProSe direct communication is to establish a communication link between two or more terminal devices with a ProSe function within a direct communication range. A ProSe direct communication link may be established based on the E-UTRAN or the WLAN technology. ProSe direct communication may be applied to a public security scenario.

### 5. Network coverage scenario

The network coverage scenario may include an out of coverage (out of coverage) scenario, a partial in coverage (partial in coverage) scenario, and an in coverage (in coverage) scenario.

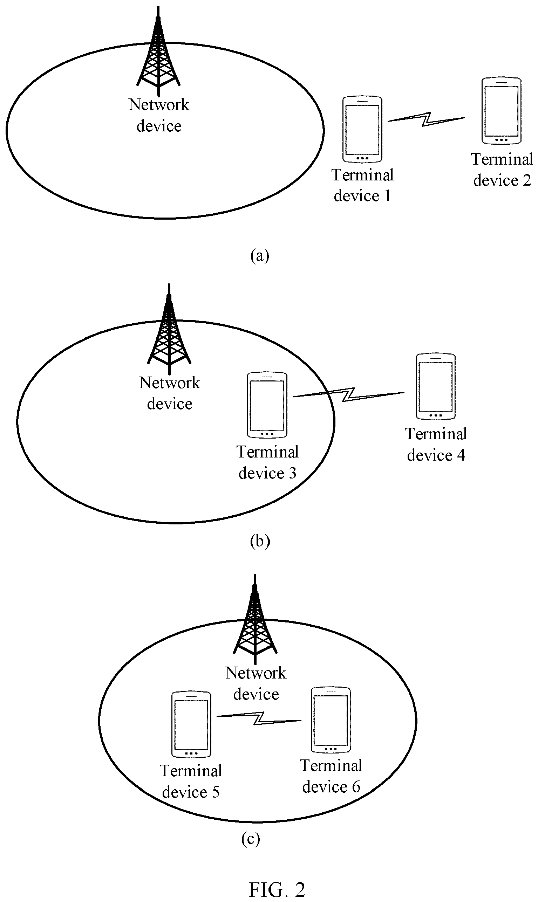

In the out of coverage scenario, as shown in (a) in FIG. 2, a terminal device 1 and a terminal device 2 that perform D2D communication are located outside a coverage area of an access network device.

In the partial in coverage scenario, as shown in (b) in FIG. 2, in a terminal device 3 and a terminal device 4 that perform D2D communication, the terminal device 3 is located within a coverage area of an access network device, and the terminal device 4 is located outside the coverage area of the access network device.

In the in coverage scenario, as shown in (c) in FIG. 2, a terminal device 5 and a terminal device 6 that perform D2D communication are both located within a coverage area of an access network device.

### 6. D2D resource scheduling

A terminal device may perform resource allocation in Mode 1 and Mode 2.

In Mode 1, similar to Uu interface resource allocation, a terminal device with a D2D function may send a scheduling request (scheduling request, SR)/buffer status report (buffer status report, BSR) request to an access network device. The SR/BSR request may be used to request an LTE sidelink transmission resource. The access network device receives the SR/BSR request, and schedules the sidelink transmission resource. The sidelink transmission resource may be used to transmit LTE sidelink control information and data. Mode 1 is applicable to a terminal device within a coverage area and in a connected (radio resource control (radio resource control, RRC)_connected) mode.

In Mode 2, the terminal device independently selects a resource from a transmission resource pool (resource pool). The resource pool may be preconfigured, or may be configured by an access network device based on RRC dedicated signaling or a system information block (system information block, SIB) message. Mode 2 is applicable to a terminal device within a coverage area or outside a coverage area, and is applicable to a terminal device in an idle (RRC_idle) mode, an inactive (RRC_inactive) mode, or a connected (connected) mode.

### 7. ProSe direct discovery

An implementation of ProSe direct discovery (direct discovery) may include Mode A and Mode B.

Mode A: In Mode A, a terminal device with a D2D communication function may be defined as an announcing (announcing) terminal device and a monitoring (monitoring) terminal device. The announcing terminal device may be configured to send an announcing message to a nearby terminal device authorized to discover the announcing terminal device. The monitoring terminal device may be configured to monitor information of interest to a monitoring terminal device near the announcing terminal device.

In Mode A, the announcing terminal device may send the announcing message at a predefined discovery interval, and a monitoring terminal device interested in the announcing message receives and processes the announcing message.

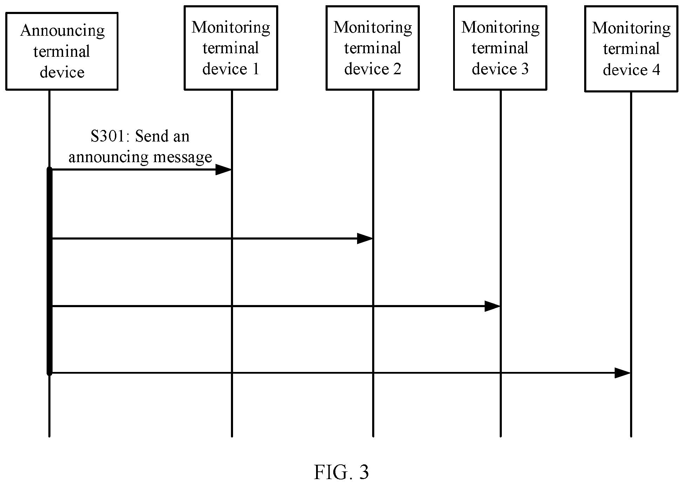

As shown in FIG. 3, in S301, the announcing terminal device sends the announcing message. Correspondingly, a monitoring terminal device 1 to a monitoring terminal device 4 receive the announcing message. In embodiments of this application, the announcing terminal device may be referred to as a relay terminal device, and the monitoring terminal device may be referred to as a remote terminal device.

Mode B: In Mode B, a terminal device with a D2D communication function may be defined as a discoverer (discoverer) terminal device and a discoveree (discoveree) terminal device. The discoverer terminal device may be configured to announce a request message. The request message is used to request to discover a message of interest to the terminal device. The discoveree terminal device may be configured to: receive the request message, and send a response message to the discoverer terminal device. The response message is used to respond to a message of interest to the discoverer terminal device.

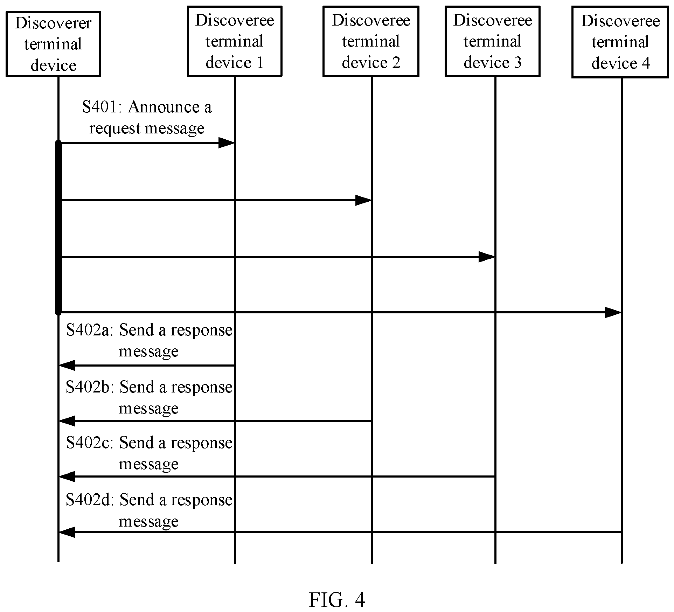

As shown in FIG. 4, in S401, the discoverer terminal device announces the request message. Correspondingly, a discoveree terminal device 1 to a discoveree terminal device 4 receive the request message. In S402a to S402d, the discoveree terminal device 1 to the discoveree terminal device 4 send a response message to the discoverer terminal device. Correspondingly, the discoverer terminal device receives the response messages from the discoveree terminal device 1 to the discoveree terminal device 4. In embodiments of this application, the discoverer terminal device may be referred to as a remote terminal device, and the discoveree terminal device may be referred to as a relay terminal device.

### 8. Layer 2 (layer 2, L2) relay terminal device

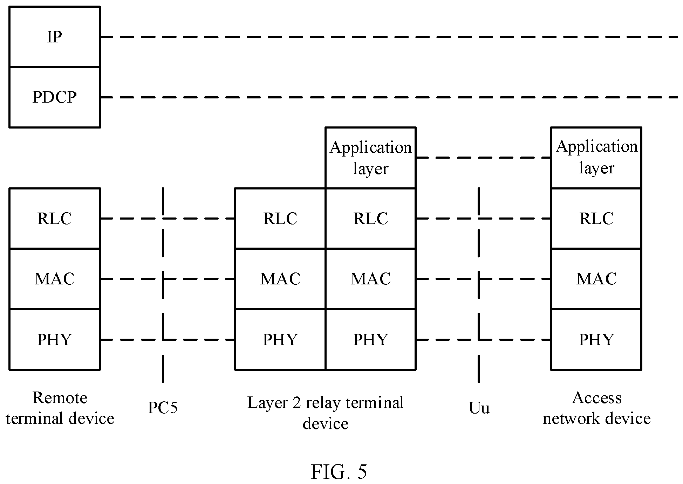

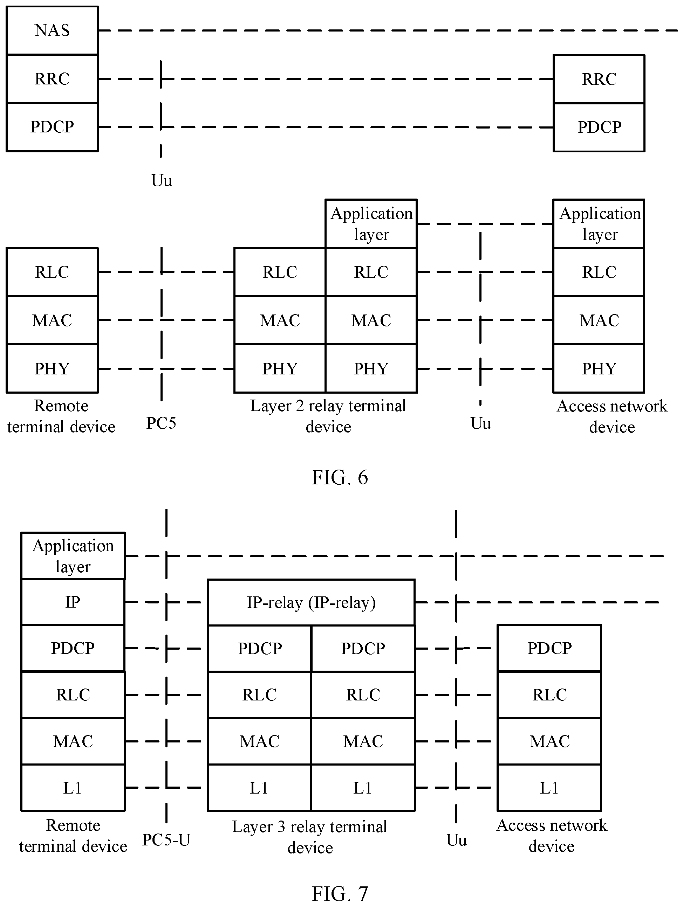

A user plane protocol stack of the L2 relay terminal device is shown in FIG. 5, and a control plane protocol stack of the L2 relay terminal device is shown in FIG. 6. The L2 relay terminal device may be configured to forward an RRC message between a remote terminal device and an access network device, and the L2 relay terminal device does not have a capability of processing the RRC message. For example, the L2 relay terminal device may forward data between the remote terminal device and the access network device.

Meanings of protocol layers in FIG. 5 are an Internet protocol (internet protocol, IP) layer, a packet data convergence protocol (packet data convergence protocol, PDCP) layer, an application (application) layer, a radio link control (radio link control, RLC) layer, a medium access control (medium access control, MAC) layer, and a physical (physical, PHY) layer. An L2 layer may be a link layer. For example, the L2 layer may be a data link layer in an open systems interconnection (open systems interconnection, OSI) reference model.

For example, as shown in FIG. 5, there is a logical interface between the remote terminal device and the relay terminal device, for example, a PC5 interface. There is a logical interface between the relay terminal device and the access network device, for example, a Uu interface (also referred to as an air interface). There is a logical interface between the remote terminal device and the access network device, for example, a Uu interface (not shown in FIG. 5).

Meanings of protocol layers in FIG. 6 are a non-access stratum (non-access stratum, NAS) protocol layer and an RRC layer. For a meaning of another protocol layer, refer to the foregoing descriptions of the meanings of the protocol layers in FIG. 5. Details are not described herein again.

### 9. Layer 3 (layer 3, L3) relay terminal device

For an architecture of a user plane protocol stack of the L3 relay terminal device, refer to FIG. 7. Meanings of protocol layers in FIG. 7 are as follows: An IP-relay (IP-relay) layer and an L1 layer each may be a physical layer. For a meaning of another protocol layer, refer to the foregoing descriptions of the meanings of the protocol layers in FIG. 5 or FIG. 6. Details are not described herein again.

The relay terminal device in the diagram of the architecture of the protocol stack shown in FIG. 7 may be referred to as an L3 relay terminal device, and L3 may be a PDCP layer. The L3 relay terminal device may be configured to generate an RRC message, and may process an RRC message from a remote terminal device, perform mobility management, and/or the like. For example, the L3 relay terminal device may wrap data of the remote terminal device in data of the relay terminal device, and send the data to an access network device. The L3 relay terminal device may be attached to a network (if the L3 relay terminal device is not connected to the network) and establish a necessary PDN connection for relay traffic, or the L3 relay terminal device may establish an additional PDN connection to provide relay traffic for the remote terminal device. A PDN connection that supports a function of the L3 relay terminal device may be used for a relay service of the remote terminal device.

### 10. Serving cell (serving cell) and camping cell

Serving cell: A terminal device is in a connected mode. For a terminal device for which carrier aggregation (carrier aggregation, CA) or dual connectivity (dual connectivity, DC) is not configured, a cell that currently serves the terminal device is a primary cell (primary cell). For a terminal device configured with CA or DC, a serving cell includes a primary cell and a secondary cell (secondary cell).

Camping cell: After being powered on, a terminal device in an idle (idle) mode or an inactive (inactive) mode selects a cell on which the terminal device is to camp.

### 11. Idle mode

When a terminal device is in an idle mode, the terminal device does not retain an RRC context (context). The RRC context is a parameter for establishing communication between the terminal device and an access network device. The RRC context may include a security context, capability information of the terminal device, and the like. In addition, the terminal device does not establish a connection to a core network element. In other words, the core network element is in CN-IDLE (a core network idle mode). The terminal device does not have to-be-transmitted data, enters a sleep (sleep) state, and disables a transceiver unit, to reduce power consumption. The terminal device in the idle mode only periodically wakes up to receive a paging message.

### 12. Connected mode

When the terminal device is in the connected mode, the terminal device has established an RRC context. A parameter required for establishing communication between the terminal device and an access network device is obtained by both communication parties. The access network device allocates a cell radio network temporary identifier (cell radio network temporary identifier, C-RNTI) to a terminal device that accesses the access network device. In addition, the terminal device also establishes a connection to a core network element. In other words, the core network element is in CN_CONNECTED (a core network connected mode). In this case, if the terminal device is transmitting data, the terminal device is in a continuous reception mode, and is switched to connected mode discontinuous reception (discontinuous reception, DRX) when entering a waiting state after data transmission is completed, to reduce power consumption. If the terminal device still has to-be-transmitted data subsequently, the terminal device returns to the continuous reception mode again. In this case, because the RRC context is established, a switching time period required when the terminal device leaves connected mode DRX and prepares for continuous reception is much shorter than a time period required when the terminal device switches from an idle mode to the connected mode.

### 13. Inactive mode

When a terminal device is in the inactive mode, an RRC context is retained between the terminal device and an access network device. In addition, the terminal device also establishes a connection to a core network element. In other words, the core network element is in CN_CONNECTED (a core network connected mode). In this case, a procedure of switching to a connected mode to receive data is fast, and no additional core network signaling overheads are generated. In addition, the terminal device in the RRC inactive mode may also enters a sleep state. Therefore, the inactive mode can meet requirements for reducing a connection latency, signaling overheads, and power consumption.

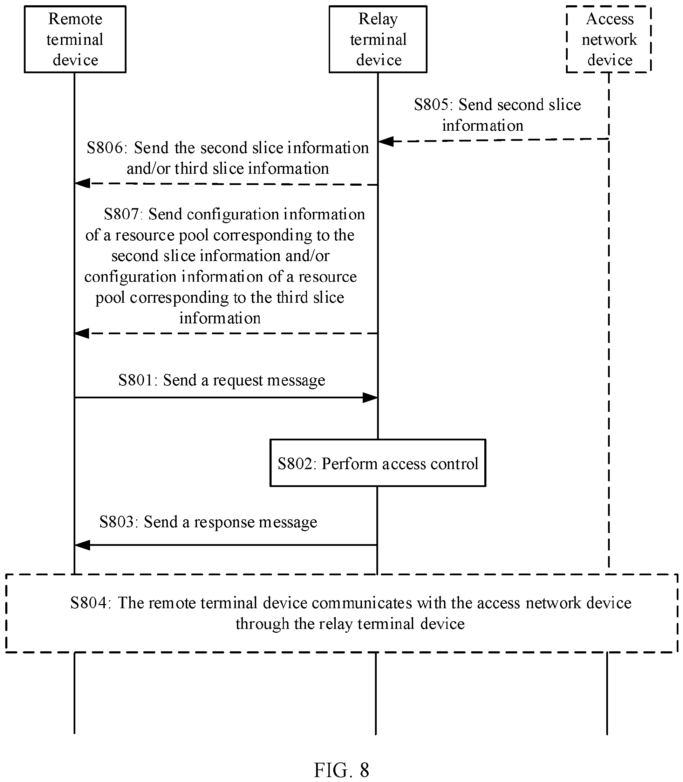

The following describes in detail communication methods provided in embodiments of this application with reference to FIG. 8 to FIG. 14.

FIG. 8 is a schematic flowchart of a communication method according to an embodiment of this application. As shown in FIG. 8, the communication method includes the following steps.

S801: A remote terminal device sends a request message. Correspondingly, a relay terminal device receives the request message from the remote terminal device.

The request message is used to request to communicate with an access network device through the relay terminal device.

For example, the request message may include first slice information, and the first slice information may include information about a slice that the remote terminal device intends to access. For an implementation of the information about the slice intended to be accessed, refer to the foregoing description of the information about the slice intended to be accessed. Details are not described herein again.

In some embodiments, that a remote terminal device sends a request message in S801 may include: The remote terminal device sends the request message to the relay terminal device, or the remote terminal device announces the request message.

For example, the remote terminal device may announce the request message through a logical interface (for example, a PC5 interface) between the remote terminal device and the relay terminal device.

Optionally, different implementations in which the remote terminal device sends the request message in S801 may correspond to scenarios in which the relay terminal device and the remote terminal device implement ProSe direct discovery in different modes.

For example, that the remote terminal device sends the request message to the relay terminal device may correspond to a scenario in which the relay terminal device and the remote terminal device implement ProSe direct discovery in Mode A. With reference to FIG. 3, the relay terminal device may be an announcing terminal device in FIG. 3, and the remote terminal device may be a monitoring terminal device in FIG. 3.

For another example, that the remote terminal device announces the request message may correspond to a scenario in which the relay terminal device and the remote terminal device implement ProSe direct discovery in Mode B. With reference to FIG. 4, the remote terminal device may be a discoverer terminal device in FIG. 4, and the relay terminal device may be a discoveree terminal device in FIG. 4.

In a possible design manner, the communication method provided in this embodiment of this application may further include: S805: The access network device sends second slice information. Correspondingly, the relay terminal device receives the second slice information from the access network device.

For example, the second slice information may be announced by using a SIB message. In this way, signaling overheads can be reduced.

In some embodiments, after the relay terminal device receives the second slice information, the relay terminal device may implement S806 and/or S802 based on the second slice information. For example, this corresponds to the scenario in which the relay terminal device and the remote terminal device implement ProSe direct discovery in Mode A.

In some embodiments, the relay terminal device may implement S802 based on the second slice information, and may not perform S806. For example, this corresponds to the scenario in which the relay terminal device and the remote terminal device implement ProSe direct discovery in Mode B.

It should be noted that, a sequence of S805, S801, S802 to S804, and S806 and S807 is not limited in this embodiment of this application. For example, the access network device may perform S805 before S801, or the access network device may perform S805 after S801.

In a possible design manner, the communication method provided in this embodiment of this application may further include: S806: The relay terminal device sends the second slice information and/or third slice information. Correspondingly, the remote terminal device receives the second slice information and/or the third slice information from the relay terminal device.

Optionally, the second slice information and/or the third slice information sent by the relay terminal device may be received from the access network device.

For example, the relay terminal device may unicast, multicast, or announce the second slice information and/or the third slice information through a PC5 interface, and the remote terminal device may receive the second slice information and/or the third slice information through the PC5 interface. When sending is performed through multicast or announcing, signaling overheads can be reduced.

S806 is optional. For example, the communication method provided in this embodiment of this application includes S806, which may correspond to the scenario in which the relay terminal device and the remote terminal device implement ProSe direct discovery in Mode A. The communication method provided in this embodiment of this application does not include S806, which may correspond to the scenario in which the relay terminal device and the remote terminal device implement ProSe direct discovery in Mode B.

Optionally, S806 may be performed before S801, so that the remote terminal device can send the request message to the relay terminal device with reference to the second slice information and/or the third slice information, to increase a success rate of requesting to communicate with the access network device through the relay terminal device, and reduce signaling overheads.

It should be noted that, a sequence of S806 and S805 is not limited in this embodiment of this application. For example, S806 may be performed before S805. For example, in S806, before the relay terminal device receives the second slice information, the relay terminal device may send the third slice information, but does not send the second slice information. For another example, S806 may be performed after S805. For example, in S806, when the relay terminal device has received the second slice information, the relay terminal device may send the second slice information and/or the third slice information.

Optionally, the second slice information may include information about a slice supported by a cell on which the relay terminal device currently camps or a cell that currently serves the relay terminal device. The relay terminal device may be an L2 relay terminal device or an L3 relay terminal device.

For example, the L2 relay terminal device or the L3 relay terminal device may send the information about the slice supported by the cell on which the relay terminal device currently camps or the cell that currently serves the relay terminal device.

Optionally, the third slice information may include one or more of the following: information about a slice supported by the relay terminal device, information about an air interface capability corresponding to the relay terminal device, and information about a slice corresponding to an on-going PDU session of the relay terminal device. Alternatively, the third slice information may include one or more of the following: information about a slice supported by the relay terminal device, information about an air interface capability corresponding to the relay terminal device, and information about a slice corresponding to a suspended PDU session of the relay terminal device.

In some embodiments, the third slice information may include the information about the slice supported by the relay terminal device. The relay terminal device may be an L2 relay terminal device or an L3 relay terminal device.

For example, the L2 relay terminal device or the L3 relay terminal device may send the information about the slice supported by the relay terminal device.

In some embodiments, the third slice information may include the information about the air interface capability corresponding to the relay terminal device. Optionally, the relay terminal device may be an L2 relay terminal device.

For example, the L2 relay terminal device forwards data between the remote terminal device and the access network device. If an air interface capability corresponding to the L2 relay terminal device supports the slice that the remote terminal device intends to access, but the slice that the remote terminal device intends to access is not subscribed to, the L2 relay terminal device may implement a function of the L2 relay terminal device through the slice intended to be accessed. Therefore, in S806, the third slice information sent by the L2 relay terminal device may include the information about the air interface capability corresponding to the relay terminal device.

For example, the L3 relay terminal device not only needs to forward data between the remote terminal device and the access network device, but also needs to send data between the L3 relay terminal device and the access network device. If an air interface capability corresponding to the L3 relay terminal device supports the slice that the remote terminal device intends to access, but the slice that the remote terminal device intends to access is not subscribed to, the L3 relay terminal device cannot implement a function of the L3 relay terminal device through the slice intended to be accessed. Therefore, in S806, the L3 relay terminal device may not send information about the air interface capability corresponding to the L3 relay terminal device, and further, in a process of sending the request message, the remote terminal device does not refer to the information about the air interface capability corresponding to the L3 relay terminal device, to reduce signaling overheads.

It can be understood that, whether the relay terminal device performs S806 with reference to a type of the relay terminal device (for example, the L2 relay terminal device or the L3 relay terminal device) is not limited in this embodiment of this application. For example, the third slice information sent by the L3 relay terminal device may include the information about the air interface capability corresponding to the L3 relay terminal device.

In some embodiments, the third slice information may include the information about the slice corresponding to the on-going (on-going) PDU session of the relay terminal device. The relay terminal device may be in a connected mode.

For example, the L2 relay terminal device in the connected mode or the L3 relay terminal device in the connected mode may send information about a slice corresponding to an on-going PDU session of the L2 relay terminal device or the L3 relay terminal device.

In some embodiments, the third slice information may include the information about the slice corresponding to the suspended (suspended) PDU session of the relay terminal device. The relay terminal device may be in an inactive mode.

For example, the L2 relay terminal device in the inactive mode or the L3 relay terminal device in the inactive mode may send information about a slice corresponding to a currently suspended PDU session of the L2 relay terminal device or the L3 relay terminal device.

In a possible design manner, that a remote terminal device sends a request message in S801 may include: The remote terminal device sends the request message to the relay terminal device with reference to the second slice information.

Optionally, the second slice information may be received by the remote terminal device from the relay terminal device.

For example, after determining that a slice supported by a cell on which a relay terminal device in the idle mode or the inactive mode currently camps includes the slice that the remote terminal device intends to access, the remote terminal device may send, to the relay terminal device, the information about the slice that the remote terminal device intends to access. Alternatively, after determining that a slice supported by a cell that currently serves the relay terminal device in the connected mode includes the slice that the remote terminal device intends to access, the remote terminal device may send, to the relay terminal device, the information about the slice that the remote terminal device intends to access. In this way, a success rate of requesting to communicate with the access network device through the relay terminal device can be increased, to reduce signaling overheads.

In another possible design manner, that a remote terminal device sends a request message in S801 may include: The remote terminal device sends the request message to the relay terminal device with reference to the third slice information.

Optionally, the third slice information may be received by the remote terminal device from the relay terminal device.

For example, the third slice information includes the information about the slice supported by the relay terminal device.

For example, after determining that a slice supported by the L2 relay terminal device or the L3 relay terminal device includes the slice that the remote terminal device intends to access, the remote terminal device may send, to the L2 relay terminal device or the L3 relay terminal device, the information about the slice that the remote terminal device intends to access. In this way, a success rate of requesting to communicate with the access network device through the relay terminal device can be increased, to reduce signaling overheads.

For example, the third slice information includes the information about the air interface capability corresponding to the relay terminal device.

For example, after determining that the air interface capability corresponding to the L2 relay terminal device supports the slice that the remote terminal device intends to access, the remote terminal device may send, to the relay terminal device, the information about the slice that the remote terminal device intends to access. In this way, a success rate of requesting to communicate with the access network device through the relay terminal device can be increased, to reduce signaling overheads.

Optionally, the remote terminal device may send the request message to the relay terminal device without referring to the information about the air interface capability corresponding to the L3 relay terminal device, to reduce signaling overheads.

For example, the third slice information includes the information about the slice corresponding to the on-going PDU session of the relay terminal device.

For example, after determining that a slice corresponding to an on-going PDU session of the relay terminal device in the connected mode includes the slice that the remote terminal device intends to access, the remote terminal device may send, to the relay terminal device, the information about the slice that the remote terminal device intends to access.

In this way, the remote terminal device may choose to send the request message to a relay terminal device whose on-going PDU session corresponds to a slice that includes the slice that the remote terminal device intends to access, to prevent the relay terminal device from reestablishing a PDU session for the remote terminal device, and reduce an access latency of the remote terminal device.

For example, the third slice information includes the information about the slice corresponding to the suspended PDU session of the relay terminal device.

For example, after determining that a slice corresponding to a suspended PDU session of the relay terminal device in the inactive mode includes the slice that the remote terminal device intends to access, the remote terminal device may send, to the relay terminal device, the information about the slice that the remote terminal device intends to access, to increase a success rate of requesting to communicate with the access network device through the relay terminal device, and reduce signaling overheads.

Optionally, when the relay terminal device is in the inactive mode, the access network device has stored an access context, and the relay terminal device has stored the access context, so that the relay terminal device can be quickly restored from the inactive mode to the connected mode. In addition, the access network device and the core network element are in a connected mode, so that the suspended PDU session can be quickly restored for data transmission, and an access latency of the remote terminal device can be reduced.

In some embodiments, the third slice information may include the information about the slice supported by the relay terminal device and/or the information about the air interface capability corresponding to the relay terminal device, and the information about the slice corresponding to the on-going PDU session of the relay terminal device. For a specific implementation in which the corresponding remote terminal device sends the request message to the relay terminal device with reference to the third slice information, refer to the foregoing corresponding examples. Details are not described herein again.

In some other embodiments, the third slice information may include the information about the slice supported by the relay terminal device and/or the information about the air interface capability corresponding to the relay terminal device, and the information about the slice corresponding to the suspended PDU session of the relay terminal device. For a specific implementation in which the corresponding remote terminal device sends the request message to the relay terminal device with reference to the third slice information, refer to the foregoing corresponding examples. Details are not described herein again.

In still another possible design manner, that a remote terminal device sends a request message in S801 may include: The remote terminal device sends the request message to the relay terminal device with reference to the second slice information and the third slice information.

Optionally, the second slice information and the third slice information may be received by the remote terminal device from the relay terminal device.

For example, the third slice information includes the information about the slice supported by the relay terminal device. After determining that a slice supported by a cell in which the relay terminal device in the idle mode or the inactive mode currently camps or a cell that currently serves the relay terminal device in the connected mode includes the slice that the remote terminal device intends to access, and the slice supported by the relay terminal device includes the slice that the remote terminal device intends to access, the remote terminal device sends, to the relay terminal device, the information about the slice that the remote terminal device intends to access. In this way, a success rate of requesting to communicate with the access network device through the relay terminal device can be increased, to reduce signaling overheads.

When the third slice information includes the information about the air interface capability corresponding to the relay terminal device, or the third slice information includes the information about the slice corresponding to the on-going PDU session of the relay terminal device, or the third slice information includes the information about the slice corresponding to the suspended PDU session of the relay terminal device, or the third slice information includes the information about the slice supported by the relay terminal device and/or the information about the air interface capability corresponding to the relay terminal device, and the information about the slice corresponding to the on-going PDU session of the relay terminal device, or the third slice information includes the information about the slice supported by the relay terminal device and/or the information about the air interface capability corresponding to the relay terminal device, and the information about the slice corresponding to the suspended PDU session of the relay terminal device, for a specific implementation in which the remote terminal device sends the request message to the relay terminal device with reference to the second slice information and the third slice information, refer to the foregoing corresponding examples. Details are not described herein again.

It should be noted that, whether the remote terminal device sends the request message to the relay terminal device with reference to the second slice information and/or the third slice information after the relay terminal device sends the second slice information and/or the third slice information to the remote terminal device is not limited in this embodiment of this application. For example, after the relay terminal device sends the second slice information to the remote terminal device, the remote terminal device may send the request message to the relay terminal device without referring to the second slice information. For another example, the relay terminal device sends the second slice information and the third slice information to the remote terminal device, and the remote terminal device may send the request message to the relay terminal device with reference to the third slice information without referring to the second slice information. Details are not listed one by one in this embodiment of this application.

That the remote terminal device sends the request message to the relay terminal device with reference to the second slice information and/or the third slice information is an optional manner in this embodiment of this application. For example, this may correspond to the scenario in which the relay terminal device and the remote terminal device implement ProSe direct discovery in Mode A.

S802: The relay terminal device performs access control.

In a possible design manner, S802 may include: The relay terminal device performs access control based on the first slice information and the second slice information.

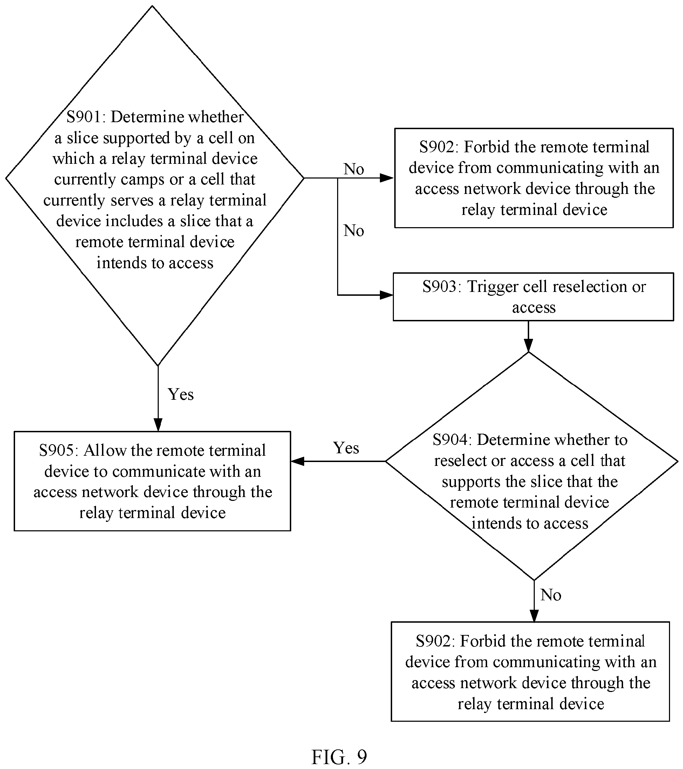

For a specific implementation, refer to the following communication methods shown in FIG. 9 to FIG. 10. Details are not described herein again.

In another possible design manner, S802 may include: The relay terminal device performs access control based on the first slice information and the third slice information.

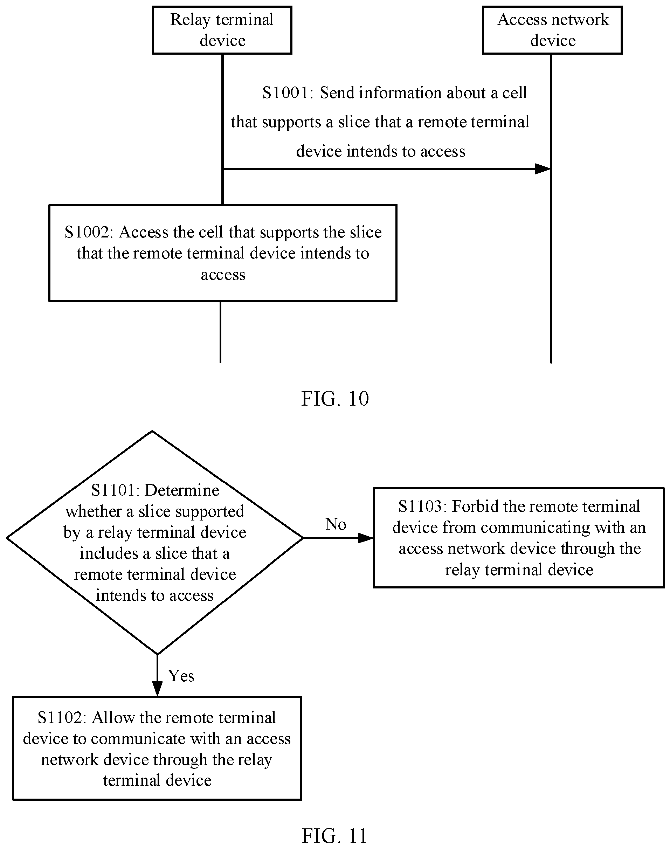

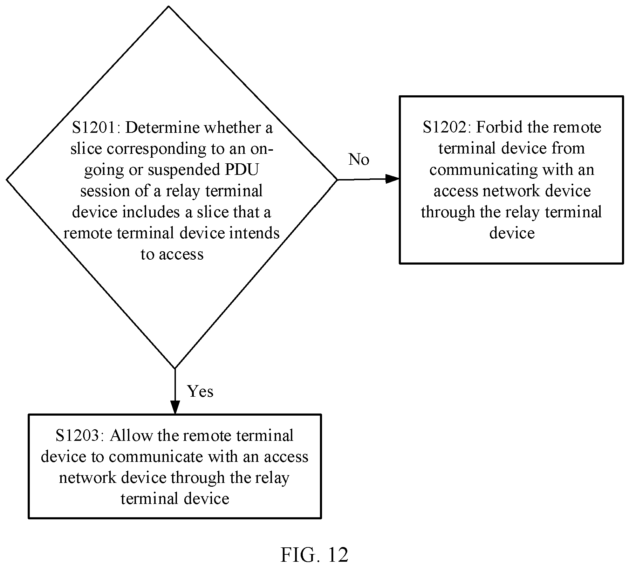

For a specific implementation, refer to the following communication methods shown in FIG. 11 and/or FIG. 12. Details are not described herein again.

In still another possible design manner, S802 may include: The relay terminal device performs access control based on the first slice information, the second slice information, and the third slice information.

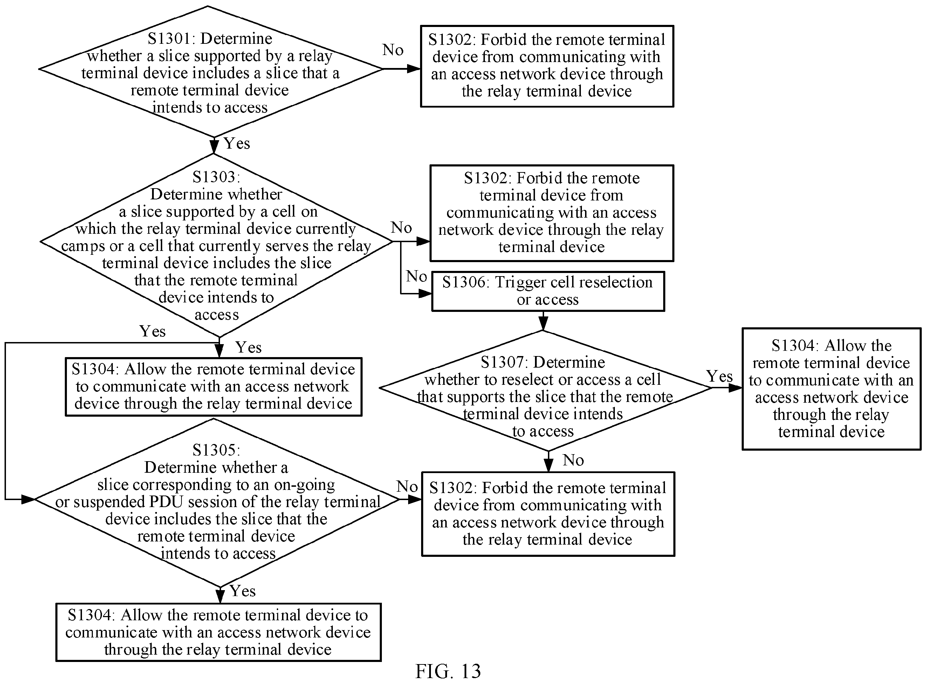

For a specific implementation, refer to the following communication method in FIG. 13. Details are not described herein again.

Optionally, the implementation in which the relay terminal device performs access control in S802 may be used in combination with the implementation in which the remote terminal device sends the request message with reference to the second slice information and/or the third slice information in S801. For example, this may correspond to the scenario in which the relay terminal device and the remote terminal device implement ProSe direct discovery in Mode A.

For example, if the relay terminal device sends the second slice information to the remote terminal device in step S806, the remote terminal device sends the request message to the relay terminal device with reference to the second slice information in S801. Optionally, the relay terminal device performs access control with reference to the third slice information without referring to the second slice information in S802, to reduce power consumption. Optionally, the relay terminal device may perform access control with reference to a resource, a current load of a resource pool, and the like.

For another example, if the relay terminal device sends the second slice information and the third slice information to the remote terminal device in step S806, the remote terminal device sends the request message to the relay terminal device with reference to the second slice information and the third slice information in S801. Optionally, the relay terminal device performs access control without referring to the second slice information and the third slice information in S802, to reduce power consumption. For example, the relay terminal device may perform access control with reference to a resource, a current load of a resource pool, and the like.

It should be noted that, the foregoing are merely some examples provided in this application. The examples are not listed one by one.

S803: The relay terminal device sends a response message to the remote terminal device. Correspondingly, the remote terminal device receives the response message from the relay terminal device.

For example, the response message may indicate that the remote terminal device is allowed to communicate with the access network device through the relay terminal device. Alternatively, the response message may indicate that the remote terminal device is not allowed to communicate with the access network device through the relay terminal device.

Optionally, the response message may be sent by the relay terminal device to the remote terminal device after the relay terminal device performs access control based on the first slice information, the second slice information, and/or the third slice information.

Optionally, the relay terminal device may send the response message to the remote terminal device based on an access control result. For example, if the relay terminal device learns, in S802, that the remote terminal device is allowed to communicate with the access network device through the relay terminal device, the response message may indicate that the remote terminal device is allowed to communicate with the access network device through the relay terminal device, to indicate the remote terminal device to communicate with the access network device through the relay terminal device, so that the remote terminal device and the relay terminal device can perform service transmission on a slice resource, to meet different service requirements.

If the relay terminal device learns, in S802, that the remote terminal device is forbidden from communicating with the access network device through the relay terminal device, the response message may indicate that the remote terminal device is not allowed to communicate or is forbidden from communicating with the access network device through the relay terminal device, to indicate the remote terminal device not to communicate with the access network device through the relay terminal device.

In a possible design manner, the communication method provided in this embodiment of this application may further include: S804: The remote terminal device communicates with the access network device through the relay terminal device.

For example, if the response message indicates that the remote terminal device is allowed to communicate with the access network device through the relay terminal device, the remote terminal device communicates with the access network device through the relay terminal device, so that the remote terminal device can perform service transmission on a slice resource, to meet different service requirements.

If the response message indicates that the remote terminal device is not allowed to communicate with the access network device through the relay terminal device, the remote terminal device does not communicate with the access network device through the relay terminal device.

In this way, the remote terminal device may determine, based on an indication of the response message, whether to select the relay terminal device to communicate with the access network device, and then select a proper relay terminal device to communicate with the access network device, so that the remote terminal device can enjoy a slice service.

For example, if the response message indicates that the remote terminal device is not allowed to communicate with the access network device through the relay terminal device, the remote terminal device does not communicate with the access network device through the relay terminal device, and may choose to communicate with the access network device through another relay terminal device.

In a possible design manner, the communication method provided in this embodiment of this application may further include: S807: The relay terminal device sends configuration information of a resource pool corresponding to the second slice information and/or configuration information of a resource pool corresponding to the third slice information. Correspondingly, the remote terminal device receives, from the relay terminal device, the configuration information of the resource pool corresponding to the second slice information and/or the configuration information of the resource pool corresponding to the third slice information.

For example, the relay terminal device may unicast, multicast, or announce, through the PC5 interface, the configuration information of the resource pool corresponding to the second slice information and/or the configuration information of the resource pool corresponding to the third slice information. The remote terminal device may receive, from the relay terminal device through the PC5 interface, the configuration information of the resource pool corresponding to the second slice information and/or the configuration information of the resource pool corresponding to the third slice information. Therefore, when sending is performed through multicast or announcing, signaling overheads can be reduced.

Optionally, S807 may be performed before S801, so that the remote terminal device can send the request message to the relay terminal device with reference to configuration information of a resource pool corresponding to a slice (for example, the slice supported by the cell on which the relay terminal device currently camps or the slice supported by the cell that currently serves the relay terminal device) included in the second slice information and/or configuration information of a resource pool corresponding to a slice (for example, the slice supported by the relay terminal device) included in the third slice information, to increase a success rate of requesting to communicate with the access network device through the relay terminal device, and reduce signaling overheads. For example, this may correspond to the scenario in which the relay terminal device and the remote terminal device implement ProSe direct discovery in Mode A.

Optionally, S807 may be performed after S801. For example, this may correspond to the scenario in which the relay terminal device and the remote terminal device implement ProSe direct discovery in Mode B.

It should be noted that, a sequence of S807 and S806 is not limited in this application. For example, S807 and S806 may be performed in a same step. For example, this may correspond to the scenario in which the relay terminal device and the remote terminal device implement ProSe direct discovery in Mode A.

In some embodiments, the remote terminal device may communicate with the access network device through the relay terminal device based on the configuration information of the resource pool corresponding to the second slice information and/or the configuration information of the resource pool corresponding to the third slice information.

Optionally, the configuration information of the resource pool corresponding to the second slice information and/or the configuration information of the resource pool corresponding to the third slice information may be received by the remote terminal device from the relay terminal device.

For example, assuming that the slice that the remote terminal device intends to access is the slice supported by the cell on which the relay terminal device currently camps or the cell that currently serves the relay terminal device, the remote terminal device may perform communication based on configuration information of a resource pool corresponding to the slice supported by the cell on which the relay terminal device currently camps or the cell that currently serves the relay terminal device, to enjoy a slice service.

For example, assuming that the slice that the remote terminal device intends to access is the slice supported by the relay terminal device, the remote terminal device may perform communication based on configuration information of a resource pool corresponding to the slice supported by the relay terminal device, to enjoy a slice service. Examples are not provided one by one in this embodiment of this application.

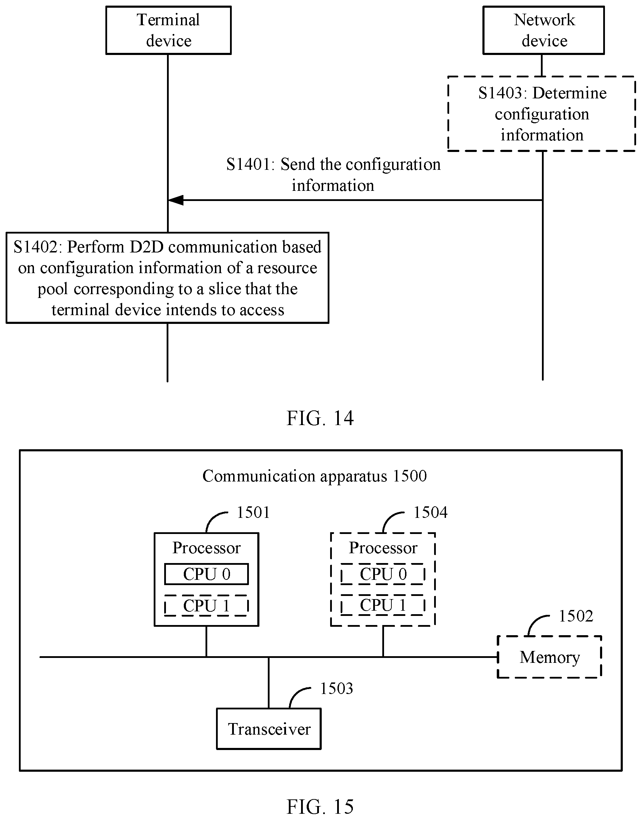

For a specific implementation of the configuration information of the resource pool, refer to the communication method shown in FIG. 14. Details are not described herein again.

Optionally, the remote terminal device (for example, a MAC layer of the remote terminal device) may perform logical channel prioritization (logical channel prioritization, LCP) resource scheduling based on an association relationship between a currently selected resource pool and a slice and an association relationship between data on a logical channel (logical channel, LCH) and a slice.

For example, assuming that the remote terminal device needs to transmit data of a plurality of slices, data on an LCH 1 is associated with a slice 1, data on an LCH 2 and data on an LCH 3 are associated with a slice 2, and a slice corresponding to a resource pool currently selected by the relay terminal device is the slice 1, the LCH 1 may be set to have a highest priority, so that the data on the LCH 1 can be transmitted before the data on the LCH 2 and the data on the LCH 3.

In this way, related slice data can be transmitted on a corresponding slice resource, and a slice service requirement can be met.

It should be noted that, specific implementations of the communication method provided in this embodiment of this application may be the same when a difference between implementing ProSe direct discovery in Mode A and implementing ProSe direct discovery in Mode B is not emphasized. Specific implementations of the communication method provided in this embodiment of this application may be the same when a difference between a case in which the communication method corresponds to the L2 relay terminal device and a case in which the communication method corresponds to the L3 relay terminal device is not emphasized.

In the communication method, the relay terminal device receives, from the remote terminal device, the request message that includes the first slice information. The request message is used to request to communicate with the access network device through the relay terminal device, and the first slice information includes the information about the slice that the remote terminal device intends to access. In this way, the relay terminal device may perform access control based on the first slice information and the second slice information, and send the response message to the remote terminal device. The second slice information includes the information about the slice supported by the cell on which the relay terminal device currently camps or the cell that currently serves the relay terminal device. Access control is performed based on a slice. Therefore, the communication method may be applied to a network slice service scenario, and may meet different service requirements.

The following describes in detail, with reference to FIG. 9 to FIG. 13, a case in which a relay terminal device performs access control on a remote device.

That a relay terminal device performs access control based on first slice information and second slice information is described in detail with reference to FIG. 9 and FIG. 10.

As shown in FIG. 9, the communication method includes the following steps.

S901: The relay terminal device determines whether a slice supported by a cell on which the relay terminal device currently camps or a cell that currently serves the relay terminal device includes a slice that a remote terminal device intends to access.

S905 may be performed if the slice supported by the cell on which the relay terminal device currently camps or the cell that currently serves the relay terminal device includes the slice that the remote terminal device intends to access. To be specific, when a slice supported by a cell on which the relay terminal device in an idle mode or an inactive mode currently camps includes the slice that the remote terminal device intends to access or a slice supported by a cell that currently serves the relay terminal device in a connected mode includes the slice that the remote terminal device intends to access, the remote terminal device may be allowed to communicate with an access network device through the relay terminal device.

S902 or S903 may be performed if the slice supported by the cell on which the relay terminal device currently camps or the cell that currently serves the relay terminal device does not include the slice that the remote terminal device intends to access.

S902: The relay terminal device forbids the remote terminal device from communicating with the access network device through the relay terminal device.

S903: The relay terminal device triggers cell reselection or access.

The relay terminal device may perform S904 after triggering cell reselection or access.

Triggering cell reselection is used as an example. It is assumed that a slice supported by a cell 1 is a slice 2, a slice supported by a cell 2 is a slice 1, a slice supported by a cell 3 is a slice 3, a slice that the relay terminal device intends to access is a slice 1, and a cell on which the relay terminal device currently camps is a cell 1. If the cell 1 on which the relay terminal device currently camps does not support the slice 1 that the terminal device intends to access, the relay terminal device may trigger cell reselection, and then perform S904.

S904: The relay terminal device determines whether to reselect or access a cell that supports the slice that the remote terminal device intends to access.

For example, S905 may be performed if the cell that supports the slice that the remote terminal device intends to access is to be selected or accessed. S902 may be performed if the cell that supports the slice that the remote terminal device intends to access is not to be selected or accessed.

The relay terminal device may reselect the cell 2, or may reselect the cell 3. If the relay terminal device reselects the cell 2, because the cell 2 supports the slice 1, it indicates that the cell that supports the slice that the remote terminal device intends to access is to be selected or accessed, and S905 is performed. If the relay terminal device reselects the cell 3, because the slice supported by the cell 3 is the slice 3, and the slice 1 that the relay terminal device intends to access is not supported, it indicates that the cell that supports the slice that the remote terminal device intends to access is not to be selected or accessed, and S902 is performed.

S905: The relay terminal device allows the remote terminal device to communicate with the access network device through the relay terminal device.

In this way, the relay terminal device may reselect, from the cell that currently serves the relay terminal device, a cell that supports the slice that the remote terminal device intends to access, so that the remote terminal device is allowed to communicate with the access network device through the relay terminal device, and processes such as a process of forbidding the remote terminal device from communicating with the access network device through the relay terminal device and a process in which the remote terminal device resends a request message are omitted, to reduce an access latency of the remote terminal device.

Optionally, S903 in which the relay terminal device triggers cell access may include a communication method shown in FIG. 10.

As shown in FIG. 10, the communication method includes the following steps.

S1001: The relay terminal device sends, to the access network device, information about the cell that supports the slice that the remote terminal device intends to access. Correspondingly, the access network device receives, from the relay terminal device, the information about the cell that supports the slice that the remote terminal device intends to access.

Optionally, the information about the cell that supports the slice that the remote terminal device intends to access may be sent by using a measurement report.

S1002: The relay terminal device accesses the cell that supports the slice that the remote terminal device intends to access.

For example, the relay terminal device may access, through dual connectivity, carrier aggregation, or a handover, the cell that supports the slice that the remote terminal device intends to access.

In this way, if the cell that currently serves the relay terminal device in the connected mode does not support the slice that the remote terminal device intends to access, the relay terminal device in the connected mode may access, through dual connectivity, carrier aggregation, or a handover, the cell that supports the slice that the remote terminal device intends to access, so that the remote terminal device is allowed to communicate with the access network device through the relay terminal device in the connected mode, and processes such as a process of forbidding the remote terminal device from communicating with the access network device through the relay terminal device and a process in which the remote terminal device resends a request message are omitted, to reduce an access latency of the remote terminal device.

In the communication method, the relay terminal device in the idle mode or in the inactive mode may perform access control by determining whether the slice supported by the cell on which the relay terminal device currently camps includes the slice that the remote terminal device intends to access. The relay terminal device in the connected mode may perform access control by determining whether the slice supported by the cell that currently serves the relay terminal device includes the slice that the remote terminal device intends to access. In this way, the remote terminal device can perform service transmission on a slice resource, to meet different service requirements.

That a relay terminal device performs access control based on first slice information and third slice information is described in detail with reference to FIG. 11. In a communication method shown in FIG. 11, an example in which the third slice information includes information about a slice supported by the relay terminal device or information about an air interface capability corresponding to the relay terminal device is used for description.

As shown in FIG. 11, the communication method includes the following steps.

S1101: The relay terminal device determines whether the slice supported by the relay terminal device includes a slice that a remote terminal device intends to access.

For example, the relay terminal device may be an L2 relay terminal device or an L3 relay terminal device.

Alternatively, S1101: The relay terminal device determines whether the air interface capability corresponding to the relay terminal device supports a slice that a remote terminal device intends to access (not shown in FIG. 11). For example, the relay terminal device may be an L2 relay terminal device.

Specifically, S1102 may be performed if the slice supported by the relay terminal device includes the slice that the remote terminal device intends to access or if the air interface capability corresponding to the relay terminal device supports the slice that a remote terminal device intends to access; or S1103 may be performed if the slice supported by the relay terminal device does not include the slice that the remote terminal device intends to access or if the air interface capability corresponding to the relay terminal device does not support the slice that a remote terminal device intends to access.

For example, it is assumed that the relay terminal device is an L2 relay terminal device, and the L2 relay terminal device forwards data between the remote terminal device and an access network device. S1102 may be performed if an air interface capability corresponding to the L2 relay terminal device supports the slice that the remote terminal device intends to access; or S 1103 may be performed if an air interface capability corresponding to the L2 relay terminal device does not support the slice that the remote terminal device intends to access. Alternatively, S1102 may be performed if a slice supported by the L2 relay terminal device includes the slice that the remote terminal device intends to access; or S1103 may be performed if a slice supported by the L2 relay terminal device does not include the slice that the remote terminal device intends to access.

It should be noted that, when the relay terminal device is an L2 relay terminal device, determining whether the slice supported by the relay terminal device includes the slice that the remote terminal device intends to access may be used in combination with determining whether the air interface capability corresponding to the relay terminal device supports the slice that the remote terminal device intends to access. For example, S1102 may be performed if the slice supported by the relay terminal device includes the slice that the remote terminal device intends to access; or whether the air interface capability corresponding to the relay terminal device supports the slice that the remote terminal device intends to access may be determined if the slice supported by the relay terminal device does not include the slice that the remote terminal device intends to access. S1102 is performed if the air interface capability corresponding to the relay terminal device supports the slice that the remote terminal device intends to access; or S1103 is performed if the air interface capability corresponding to the relay terminal device does not support the slice that the remote terminal device intends to access.

It is assumed that the relay terminal device is an L3 relay terminal device. The L3 relay terminal device not only needs to forward data between the remote terminal device and the access network device, but also needs to send data between the relay terminal device and the access network device. S1102 may be performed if a slice supported by the L3 relay terminal device includes the slice that the remote terminal device intends to access; or S1103 may be performed if a slice supported by the L3 relay terminal device does not include the slice that the remote terminal device intends to access.

S1102: The relay terminal device allows the remote terminal device to communicate with the access network device through the relay terminal device.

S1103: The relay terminal device forbids the remote terminal device from communicating with the access network device through the relay terminal device.

In the communication method, the L3 relay terminal device may perform access control by determining whether the slice supported by the L3 relay terminal device includes the slice that the remote terminal device intends to access. The L2 relay terminal device may perform access control by determining whether the slice supported by the L2 relay terminal device or the air interface capability corresponding to the L2 relay terminal device supports or includes the slice that the remote terminal device intends to access. In this way, the remote terminal device can perform service transmission on a slice resource, to meet different service requirements.

That a relay terminal device performs access control based on first slice information and third slice information is described in detail with reference to FIG. 12. In a communication method shown in FIG. 12, an example in which the third slice information includes information about a slice corresponding to an on-going or suspended PDU session of the relay terminal device is used for description.

S1201: The relay terminal device determines whether the slice corresponding to the on-going or suspended PDU session of the relay terminal device includes a slice that a remote terminal device intends to access.

For example, S1202 may be performed if the slice corresponding to the on-going or suspended PDU session of the relay terminal device includes the slice that the remote terminal device intends to access; or S1203 may be performed if the slice corresponding to the on-going or suspended PDU session of the relay terminal device does not include the slice that the remote terminal device intends to access.

S1202: The relay terminal device forbids the remote terminal device from communicating with an access network device through the relay terminal device.

S1203: The relay terminal device allows the remote terminal device to communicate with the access network device through the relay terminal device.

In the communication method, the relay terminal device in the connected mode may perform access control by determining whether the slice corresponding to the on-going PDU session of the relay terminal device includes the slice that the remote terminal device intends to access. The relay terminal device in an inactive mode may perform access control by determining whether the slice corresponding to the suspended PDU session of the relay terminal device includes the slice that the remote terminal device intends to access. In this way, the remote terminal device can perform service transmission on a slice resource, to meet different service requirements.

In some embodiments, for a specific implementation in which the relay terminal device performs access control based on the first slice information and the third slice information in S802, refer to a combination of FIG. 11 and FIG. 12. Details are not described herein again. It should be noted that, a sequence of S1101 and S1201 is not limited in this embodiment of this application, provided that access control can be implemented.

In some embodiments, for a specific implementation in which the relay terminal device performs access control based on the first slice information, the second slice information, and the third slice information in S802, refer to a combination of the communication method shown in FIG. 9 to FIG. 10 and the communication methods shown in FIG. 11 and/or FIG. 12. It should be noted that, a sequence of steps in S901 to S905, S1001 and S1002, S1101, and S1201 is not limited in this embodiment of this application, provided that access control can be implemented. Specifically, that a relay terminal device performs access control based on first slice information, second slice information, and third slice information is described in detail below with reference to FIG. 13.

In a communication method shown in FIG. 13, an example in which second slice information includes information about a slice supported by a cell on which a relay terminal device currently camps or a cell that currently serves the relay terminal device, the third slice information includes information about a slice supported by the relay terminal device or information about an air interface capability corresponding to the relay terminal device, the third slice information further includes information about a slice corresponding to an on-going protocol data unit PDU session of the relay terminal device or information about a slice corresponding to a suspended PDU session of the relay terminal device is used for description.

As shown in FIG. 13, the communication method includes the following steps.

S1301: The relay terminal device determines whether the slice supported by the relay terminal device includes a slice that a remote terminal device intends to access.

Alternatively, S1301: The relay terminal device determines whether the air interface capability corresponding to the relay terminal device supports a slice that a remote terminal device intends to access (not shown in FIG. 13). For example, the relay terminal device may be an L2 relay terminal device.

S1303 may be performed if the slice supported by the relay terminal device includes the slice that the remote terminal device intends to access or if the air interface capability corresponding to the relay terminal device supports the slice that the remote terminal device intends to access; or S1302 may be performed if the slice supported by the relay terminal device does not include the slice that the remote terminal device intends to access or if the air interface capability corresponding to the relay terminal device does not support the slice that the remote terminal device intends to access.

For a specific implementation of S1301, refer to S1101. Details are not described herein again.

S1302: The relay terminal device forbids the remote terminal device from communicating with an access network device through the relay terminal device.

S1303: The relay terminal device determines whether the slice supported by the cell on which the relay terminal device currently camps or the cell that currently serves the relay terminal device includes the slice that the remote terminal device intends to access.

For a specific implementation of S1303, refer to S901. Details are not described herein again.

S1304 or S1305 may be performed if the slice supported by the cell on which the relay terminal device currently camps or the cell that currently serves the relay terminal device includes the slice that the remote terminal device intends to access; or S1302 or S1306 may be performed if the slice supported by the cell on which the relay terminal device currently camps or the cell that currently serves the relay terminal device does not include the slice that the remote terminal device intends to access.

S1304: The relay terminal device allows the remote terminal device to communicate with the access network device through the relay terminal device.

S1305: The relay terminal device determines whether a slice corresponding to an on-going or suspended PDU session of the relay terminal device includes the slice that the remote terminal device intends to access.

S1304 may be performed if the slice corresponding to the on-going or suspended PDU session of the relay terminal device includes the slice that the remote terminal device intends to access; or S1302 may be performed if the slice corresponding to the on-going or suspended PDU session of the relay terminal device does not include the slice that the remote terminal device intends to access.

S1306: The relay terminal device triggers cell reselection or access.

The relay terminal device may perform S1307 after triggering cell reselection or access.

For a specific implementation of S1306, refer to S903. Details are not described herein again.

S1307: The relay terminal device determines whether to reselect or access a cell that supports the slice that the remote terminal device intends to access.

For a specific implementation of S1308, refer to S904. Details are not described herein again.

S1304 may be performed if the cell that supports the slice that the remote terminal device intends to access is to be reselected or accessed; or S1302 may be performed if cell that supports the slice that the remote terminal device intends to access is not to be reselected or accessed.

In the communication method, the relay terminal device performs access control with reference to a requirement (the first slice information) of the remote terminal device, a capability (the third slice information) of the relay terminal device, and a capability (the third slice information) of a cell corresponding to the relay terminal device, so that the remote terminal device and the relay terminal device can perform service transmission on a slice resource, to meet different service requirements.

It should be noted that, the foregoing is merely an example provided in this application. Examples in which the relay terminal device performs access control based on the first slice information, the second slice information, and the third slice information are not listed one by one in this embodiment of this application.

The following describes in detail a communication method provided in an embodiment of this application with reference to FIG. 14. A communication method shown in FIG. 14 may be used in combination with the communication methods shown in FIG. 8 to FIG. 13, or may be used independently. This is not limited in this application.

For example, FIG. 14 is a schematic flowchart of still another communication method according to an embodiment of this application.

As shown in FIG. 14, the communication method includes the following steps.

S1401: A network device sends configuration information to a terminal device. Correspondingly, the terminal device receives the configuration information.

For example, the network device may include an access network device, a relay terminal device, a core network element, or OAM. The relay terminal device may be used by the terminal device to communicate with the access network device through the relay terminal device.

In some embodiments, the communication method in FIG. 14 may further include: S1403: The network device determines the configuration information. In other words, the configuration information may be determined by the network device.

For example, the configuration information may include configuration information of a resource pool and a corresponding slice identifier. In other words, the configuration information of the resource pool corresponds to the slice identifier.

Optionally, the slice identifier corresponds to one or more slices.

For example, the slice identifier may be referred to as a slice group identifier (slice group ID), and one slice identifier may identify one or more slices (for example, S-NSSAI). Therefore, if the slice identifier may identify a plurality of slices, signaling overheads can be reduced.

Optionally, the configuration information may further include a mapping relationship between configuration information of a resource pool and a slice identifier.

In some embodiments, the configuration information of the resource pool may include configuration information of at least two resource pools.

For example, the configuration information may include priority information, and the priority information may indicate priorities corresponding to the configuration information of the at least two resource pools.

For example, the priority information includes a ranking sequence of the configuration information of the resource pool in the configuration information. For example, configuration information of a resource pool ranked at a first location has a highest priority, and priorities are in descending order; or configuration information of a resource pool ranked at a first location has a lowest priority, and priorities are in ascending order; or
a priority of the configuration information of the resource pool may be explicitly indicated. For example, the priority information directly indicates the priority of the configuration information of the resource pool.

Optionally, the configuration information may include load information, and the load information may include a current load of the resource pool.

In some embodiments, S 1401 in which the terminal device receives the configuration information may include: The terminal device receives configuration information from the access network device.

For example, the configuration information may be sent by the access network device by using an announcing message (for example, a SIB message), or the configuration information may be sent by the access network device by using dedicated signaling (for example, RRC signaling).

Therefore, when the terminal device is registered with a network, the access network device may directly send the configuration information to the terminal device.

In some embodiments, S 1401 in which the terminal device receives the configuration information may include: The terminal device receives configuration information from the relay terminal device.

Optionally, the relay terminal device may be used by the terminal device to communicate with the access network device through the relay terminal device. The terminal device may be a remote terminal device.

In other words, the configuration information may be received by the terminal device from the relay terminal device. For example, the relay terminal device sends the configuration information to the remote terminal device in an announcing, multicast, or unicast manner.

In this way, when the terminal device is outside a network coverage area, the relay terminal device may send the configuration information to the terminal device, so that the terminal device can enjoy a slice service.

In some embodiments, S 1401 in which the terminal device receives the configuration information may include: The terminal device receives configuration information from the core network element.

For example, the core network element may be a UPF network element.

Therefore, when the terminal device is registered with the network, the core network element may send the configuration information to the terminal device by using a NAS message.

In some embodiments, S1401 in which the terminal device receives the configuration information may include: The terminal device receives configuration information from the OAM.

For example, the configuration information may be preconfigured by the OAM for the terminal device.

For example, when the terminal device is within the network coverage area, the configuration information may be preconfigured by the OAM for the terminal device before the terminal device is registered with the network.

It should be noted that, the foregoing specific implementation in which the terminal device receives the configuration information may be used independently or in combination. This is not limited in this embodiment of this application.

S1402: The terminal device performs D2D communication based on configuration information of a resource pool corresponding to the slice that the terminal device intends to access.

Optionally, the configuration information of the resource pool corresponding to the slice that the terminal device intends (intended) to access is determined based on the configuration information and the slice that the terminal device intends to access.

For example, the configuration information includes configuration information 1 of a resource pool and a corresponding slice identifier 1, and configuration information 2 of a resource pool and a corresponding slice identifier 2, the slice identifier 1 corresponds to a slice 1 and a slice 2, the slice identifier 2 corresponds to a slice 3, and the slice that the terminal device intends to access is the slice 1. In this case, it may be determined that the slice 1 that the terminal device intends to access corresponds to the configuration information 1 of the resource pool.

Optionally, the configuration information of the first resource pool may be configuration information of a resource pool with a higher priority and/or a lower load in the configuration information of the resource pool corresponding to the slice that the terminal device intends to access.

In some embodiments, S1402 may include: The terminal device selects, based on the priority information and/or the load information, the configuration information of the first resource pool from the configuration information of the resource pool corresponding to the slice that the terminal device intends to access, to perform D2D communication.

Example 1: It is assumed that the configuration information 1 of the resource pool includes configuration information of a resource pool 1 and configuration information of a resource pool 2, a priority corresponding to the configuration information of the resource pool 1 is high, and a priority corresponding to the configuration information of the resource pool 2 is low. In this case, the terminal device may select the configuration information of the resource pool 1, to perform D2D communication.

In other words, the terminal device may select configuration information of a resource pool with a higher priority from the configuration information of the resource pool corresponding to the slice that the terminal device intends to access, to perform D2D communication.

Optionally, the load information includes a current load of at least one resource pool.

Example 2: It is assumed that the configuration information 1 of the resource pool includes configuration information of a resource pool 1 and configuration information of a resource pool 2, and a current load of the resource pool 1 is higher than a current load of the resource pool 2. In this case, the terminal device may select the configuration information of the resource pool 1, to perform D2D communication.

In other words, the terminal device may select configuration information of a resource pool with a low load from the configuration information of the resource pool corresponding to the slice that the terminal device intends to access, to perform D2D communication.

It should be noted that, examples are not listed one by one in this embodiment of this application, and Example 1 and Example 2 may be used in combination. Details are not described in this embodiment of this application again.

Optionally, for a specific manner in which the terminal device performs resource scheduling after determining the configuration information of the resource pool corresponding to the slice that the terminal device intends to access, refer to Mode 1 and Mode 2 in the foregoing D2D resource scheduling. Details are not described herein again.

In the communication method, the terminal device receives the configuration information that includes the configuration information of the resource pool and the corresponding slice identifier, and determines, from the configuration information based on an identifier of the slice that the terminal device intends to access, the configuration information of the resource pool corresponding to the slice that the terminal device intends to access. In this way, D2D communication can be performed based on the configuration information of the resource pool corresponding to the slice that the terminal device intends to access, so that the terminal device can enjoy a slice service, and a service range of a network slice can be extended. In addition, the slice identifier corresponds to one or more slices. When the slice identifier corresponds to a plurality of slices, signaling overheads can be reduced.

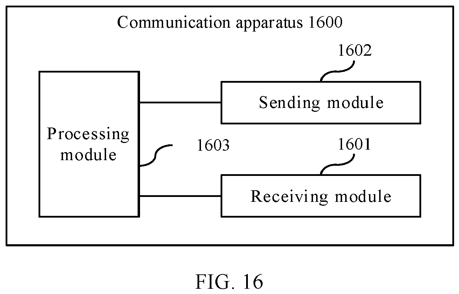

The communication methods provided in embodiments of this application are described in detail above with reference to FIG. 8 to FIG. 14. Communication apparatuses provided in embodiments of this application are described in detail below with reference to FIG. 15 and FIG. 16.

FIG. 15 is a schematic diagram of a structure of a communication apparatus that may be configured to perform a communication method according to an embodiment of this application. A communication apparatus 1500 may be a remote terminal device, a relay terminal device, an access network device, a terminal device, or a network device, or may be a chip or another component with a corresponding function that is applied to the remote terminal device, the relay terminal device, the access network device, the terminal device, or the network device. As shown in FIG. 15, the communication apparatus 1500 may include a processor 1501 and a transceiver 1503. The communication apparatus 1500 may further include a memory 1502. The processor 1501 is coupled to the memory 1502 and the transceiver 1503. For example, the processor 1501 may be connected to the memory 1502 and the transceiver 1503 by using a communication bus, or the processor 1501 may be independently used.

The following describes components of the communication apparatus 1500 in detail with reference to FIG. 15.

The processor 1501 is a control center of the communication apparatus 1500, and may be one processor, or may be a collective term of a plurality of processing elements. For example, the processor 1501 is one or more central processing units (central processing unit, CPU), or may be an application-specific integrated circuit (application-specific integrated circuit, ASIC), or may be one or more integrated circuits configured to implement embodiments of this application, for example, one or more microprocessors (digital signal processor, DSP), or one or more field programmable gate arrays (field programmable gate array, FPGA).

The processor 1501 may execute various functions of the communication apparatus 1500 by running or executing a software program stored in the memory 1502 and invoking data stored in the memory 1502.

In a specific implementation, in an embodiment, the processor 1501 may include one or more CPUs, for example, a CPU 0 and a CPU 1 shown in FIG. 15.

In a specific implementation, in an embodiment, the communication apparatus 1500 may alternatively include a plurality of processors, for example, the processor 1501 and a processor 1504 shown in FIG. 15. Each of the processors may be a single-core processor (single-CPU), or may be a multi-core processor (multi-CPU). The processor herein may be one or more communication devices, circuits, and/or processing cores configured to process data (for example, computer program instructions).

The memory 1502 may be a read-only memory (read-only memory, ROM) or another type of static storage device that may store static information and instructions, or a random access memory (random access memory, RAM) or another type of dynamic storage communication device that may store information and instructions; or may be an electrically erasable programmable read-only memory (electrically erasable programmable read-only memory, EEPROM), a compact disc read-only memory (compact disc read-only memory, CD-ROM), or another compact disc storage, an optical disc storage (including a compact disc, a laser disc, an optical disc, a digital versatile disc, and a Blu-ray disc, or the like), a disk storage medium or another disk storage communication device, or any other medium that can be used to carry or store expected program code in an instruction or data structure form and that can be accessed by a computer. However, the memory 1502 is not limited thereto. The memory 1502 may be integrated with the processor 1501, or may exist independently, and is coupled to the processor 1501 by using an input/output port (not shown in FIG. 15) of the communication apparatus 1500. This is not specifically limited in this embodiment of this application.

The memory 1502 is configured to store a software program used to execute the solutions of this application, and the processor 1501 controls execution. For a specific implementation, refer to the following method embodiments. Details are not described herein again.

The transceiver 1503 is configured to communicate with another communication apparatus. For example, when the communication apparatus 1500 is a remote terminal device, the transceiver 1503 may be configured to communicate with a relay terminal device and/or a network device. For another example, when the communication apparatus 1500 is a relay terminal device, the transceiver 1503 may be configured to communicate with a remote terminal device and/or a network device. For another example, when the communication apparatus 1500 is a network device, the transceiver 1503 may be configured to communicate with a relay terminal device and/or a remote terminal device. For another example, when the communication apparatus 1500 is an access network device, the transceiver 1503 may be configured to communicate with a relay terminal device. In addition, the transceiver 1503 may include a receiver and a transmitter (not separately shown in FIG. 15). The receiver is configured to implement a receiving function, and the transmitter is configured to implement a sending function. The transceiver 1503 may be integrated with the processor 1501, or may exist independently, and is coupled to the processor 1501 by using an input/output port (not shown in FIG. 15) of the communication apparatus 1500. This is not specifically limited in this embodiment of this application.

It should be noted that, a structure of the communication apparatus 1500 shown in FIG. 15 does not constitute a limitation on the communication apparatus. An actual communication apparatus may include more or fewer components than those shown in the figure, combine some components, or have different component arrangements.

Actions of the remote terminal device in steps S801 and S804 may be performed by the processor 1501 in the communication apparatus 1500 shown in FIG. 15 by invoking application code stored in the memory 1502 to indicate the remote terminal device to perform the actions.

Actions of the relay terminal device in steps S802, S803, S806 and S807, S901 to S905, S 1001 and S 1002, S 1101 to S1103, S 1201 to S1203, and S1301 to S 1307 may be performed by the processor 1501 in the communication apparatus 1500 shown in FIG. 15 by invoking the application code stored in the memory 1502 to indicate the remote terminal device to perform the actions. This is not limited in this embodiment.

Actions of the access network device in step S805 may be performed by the processor 1501 in the communication apparatus 1500 shown in FIG. 15 by invoking the application code stored in the memory 1502 to indicate the access network device to perform the actions. This is not limited in this embodiment.

Actions of the terminal device in step S1402 may be performed by the processor 1501 in the communication apparatus 1500 shown in FIG. 15 by invoking the application code stored in the memory 1502 to indicate the terminal device to perform the actions. This is not limited in this embodiment.

Actions of the network device in step S1401 may be performed by the processor 1501 in the communication apparatus 1500 shown in FIG. 15 by invoking the application code stored in the memory 1502 to indicate the network device to perform the actions. This is not limited in this embodiment.

FIG. 16 is a schematic diagram of a structure of another communication apparatus according to an embodiment of this application. For ease of description, FIG. 16 shows only main components of the communication apparatus.

A communication apparatus 1600 includes a receiving module 1601, a sending module 1602, and/or a processing module 1603. The communication apparatus 1600 may be the remote terminal device, the relay terminal device, the access network device, the terminal device, or the network device in the method embodiments. The receiving module 1601 may also be referred to as a receiving unit, and is configured to implement a receiving function performed by the remote terminal device, the relay terminal device, the access network device, the terminal device, or the network device in any one of the method embodiments. The sending module 1602 may also be referred to as a sending unit, and is configured to implement a sending function performed by the remote terminal device, the relay terminal device, the access network device, the terminal device, or the network device in any one of the method embodiments.

It should be noted that, the receiving module 1601 and the sending module 1602 may be disposed separately, or may be integrated into one module, namely, a transceiver module (not shown in FIG. 16). Specific implementations of the receiving module and the sending module are not specifically limited in this application. The transceiver module may include a transceiver circuit, a transceiver machine, a transceiver, or a communication interface.

The processing module 1603 may be configured to implement a processing function performed by the remote terminal device, the relay terminal device, the access network device, the terminal device, or the network device in any one of the method embodiments. The processing module 1603 may be a processor.

In this embodiment, the communication apparatus 1600 is presented in a form in which functional modules are obtained through division in an integrated manner. The "module" herein may be a specific ASIC, a circuit, a processor and a memory that execute one or more software or firmware programs, an integrated logic circuit, and/or another component that can provide the foregoing functions. In a simple embodiment, a person skilled in the art may figure out that the communication apparatus 1600 may be in a form of the communication apparatus 1500 shown in FIG. 15.

For example, the processor 1501 in the communication apparatus 1500 shown in FIG. 15 may invoke computer execution instructions stored in the memory 1502, so that the communication methods in the method embodiments are performed.

Specifically, the processor 1501 in the communication apparatus 1500 shown in FIG. 15 may invoke the computer executable instructions stored in the memory 1502, to implement functions/implementation processes of the receiving module 1601, the sending module 1602, and the processing module 1603 in FIG. 16. Alternatively, the processor 1501 in the communication apparatus 1500 shown in FIG. 15 may invoke the computer-executable instructions stored in the memory 1502, to implement functions/implementation processes of the processing module 1603 in FIG. 16, and the transceiver 1503 in the communication apparatus 1500 shown in FIG. 15 may implement functions/implementation processes of the receiving module 1601 and the sending module 1602 in FIG. 16.

Because the communication apparatus 1600 provided in this embodiment may execute the communication method, for technical effects that can be achieved by the communication apparatus 1600, refer to the method embodiments. Details are not described herein again.

In a possible design solution, the communication apparatus 1600 shown in FIG. 16 may be applied to the communication system shown in FIG. 1, and perform functions of the relay terminal device in the communication methods shown in FIG. 8 to FIG. 13. The communication apparatus 1600 includes the receiving module 1601, the sending module 1602, and the processing module 1603.

The receiving module 1601 is configured to receive a request message from a remote terminal device.

The processing module 1603 is configured to: perform access control based on first slice information and second slice information, or perform access control based on first slice information and third slice information.

The sending module 1602 is configured to send a response message to the remote terminal device. The request message is used to request to communicate with an access network device through the communication apparatus 1600, the request message includes first slice information, and the first slice information includes information about a slice that the remote terminal device intends to access. The second slice information includes information about a slice supported by a cell on which the communication apparatus 1600 currently camps or a cell that currently serves the communication apparatus 1600, and the third slice information may include information about a slice supported by the communication apparatus 1600 or information about an air interface capability corresponding to the communication apparatus 1600.

Optionally, the communication apparatus 1600 may be a relay terminal device.

Optionally, the communication apparatus 1600 may further include a storage module (not shown in FIG. 16), and the storage module stores a program or instructions. When the processing module 1603 executes the program or the instructions, the communication apparatus 1600 can perform functions of the relay terminal device in the communication methods shown in FIG. 8 to FIG. 13.

It should be noted that, the communication apparatus 1600 may be a relay terminal device, or may be a chip (system) or another part or component that may be disposed in the relay terminal device. This is not limited in this application.

In addition, for a technical effect of the communication apparatus 1600, refer to the technical effect of the communication methods shown in FIG. 8 to FIG. 13. Details are not described herein again.

In another possible design solution, the communication apparatus 1600 shown in FIG. 16 may be applied to the communication system shown in FIG. 1, and perform functions of the remote terminal device in the communication method shown in FIG. 8. The communication apparatus 1600 includes the receiving module 1601 and the sending module 1602.

The sending module 1602 is configured to send a request message. The request message is used to request to communicate with an access network device through a relay terminal device, the request message includes first slice information, and the first slice information includes information about a slice that the communication apparatus 1600 intends to access.

The receiving module 1601 is configured to receive a response message from the relay terminal device.

Optionally, the communication apparatus 1600 may further include a processing module 1603. The processing module 1603 may be configured to communicate with the access network device through the relay terminal device.

Optionally, the communication apparatus 1600 may further include a storage module (not shown in FIG. 16), and the storage module stores a program or instructions. When the processing module 1603 executes the program or the instructions, the communication apparatus 1600 can perform functions of the remote terminal device in the communication method shown in FIG. 8.

It should be noted that, the communication apparatus 1600 may be a remote terminal device, or may be a chip (system) or another part or component that may be disposed in the remote terminal device. This is not limited in this application.

In addition, for a technical effect of the communication apparatus 1600, refer to the technical effect of the communication method shown in FIG. 8. Details are not described herein again.

In still another possible design solution, the communication apparatus 1600 shown in FIG. 16 may be applied to the communication system shown in FIG. 1, and perform functions of the terminal device in the communication method shown in FIG. 14. The communication apparatus 1600 includes the receiving module 1601 and the processing module 1603.

The receiving module 1601 is configured to receive configuration information. The processing module 1603 is configured to perform D2D communication based on configuration information of a resource pool corresponding to a slice that the communication apparatus 1600 intends to access. The configuration information of the resource pool corresponding to the slice that the communication apparatus 1600 intends to access is determined based on the configuration information and the slice that the communication apparatus 1600 intends to access, the configuration information includes the configuration information of the resource pool and a corresponding slice identifier, and the slice identifier corresponds to one or more slices.

It should be noted that, the communication apparatus 1600 may further include the sending module 1602. The sending module 1602 is configured to send data and/or signaling to a network device. The receiving module 1601 and the sending module 1602 may be disposed separately, or may be integrated into one module, namely, a transceiver module (not shown in FIG. 16). Specific implementations of the receiving module 1601 and the sending module 1602 are not specifically limited in this application.

Optionally, the communication apparatus 1600 may further include a storage module (not shown in FIG. 16), and the storage module stores a program or instructions. When the processing module 1603 executes the program or the instructions, the communication apparatus 1600 can perform functions of the terminal device in the communication method shown in FIG. 14.

It should be noted that, the communication apparatus 1600 may be a terminal device, or may be a chip (system) or another part or component that may be disposed in the terminal device. This is not limited in this application.

In addition, for a technical effect of the communication apparatus 1600, refer to the technical effect of the communication method shown in FIG. 14. Details are not described herein again.

In yet another possible design solution, the communication apparatus 1600 shown in FIG. 16 may be applied to the communication system shown in FIG. 1, and perform functions of the network device in the communication method shown in FIG. 14. The communication apparatus 1600 includes the processing module 1603 and the sending module 1602.

The processing module 1603 is configured to determine configuration information. The sending module 1602 is configured to send configuration information to a terminal device. The configuration information includes configuration information of a resource pool and a corresponding slice identifier, and the slice identifier corresponds to one or more slices.

It should be noted that, the processing module 1603 may be optional. Determining the configuration information may be an optional function of the communication apparatus.

Optionally, the communication apparatus 1600 may be an access network device, a relay terminal device, a core network element, or OAM.

It should be noted that, the communication apparatus 1600 may further include the receiving module 1601. The receiving module 1601 is configured to receive data and/or signaling from the terminal device. The receiving module 1601 and the sending module 1602 may be disposed separately, or may be integrated into one module, namely, a transceiver module (not shown in FIG. 16). A specific implementation of the transceiver module is not specifically limited in this application.

Optionally, the communication apparatus 1600 may further include a storage module (not shown in FIG. 16), and the storage module stores a program or instructions. When the processing module 1603 executes the program or the instructions, the communication apparatus 1600 can perform functions of the network device in the communication method shown in FIG. 14.

It should be noted that, the communication apparatus 1600 may be a network device, for example, an access network device, a relay terminal device, a core network element, or OAM, or may be a chip (system) or another part or component that may be disposed in the network device. This is not limited in this application.

In addition, for a technical effect of the communication apparatus 1600, refer to the technical effect of the communication method shown in FIG. 14. Details are not described herein again.

An embodiment of this application provides a communication system. The communication system includes: a relay terminal device and a remote terminal device.

The relay terminal device is configured to perform actions of the relay terminal device in the foregoing method embodiments. For a specific execution method and process, refer to the method embodiments. Details are not described herein again.

The remote terminal device is configured to perform actions of the remote terminal device in the foregoing method embodiments. For a specific execution method and process, refer to the method embodiments. Details are not described herein again.

Optionally, the communication system further includes an access network device provided in the foregoing embodiments.

An embodiment of this application provides a communication system. The communication system includes: a terminal device and a network device.

The terminal device is configured to perform actions of the terminal device in the foregoing method embodiments. For a specific execution method and process, refer to the method embodiments. Details are not described herein again.

The network device is configured to perform actions of the network device in the foregoing method embodiments. For a specific execution method and process, refer to the method embodiments. Details are not described herein again.

An embodiment of this application provides a chip system. The chip system includes a processor and an input/output port. The processor is configured to implement a processing function in the communication methods provided in embodiments of this application. The input/output port is used for a sending and receiving function in the communication methods provided in embodiments of this application.

In a possible design, the chip system further includes a memory, and the memory is configured to store program instructions and data for implementing functions in the communication methods provided in embodiments of this application.

The chip system may include a chip, or may include a chip and another discrete component.

An embodiment of this application provides a computer-readable storage medium. The computer-readable storage medium includes a computer program or instructions. When the computer program or the instructions are run on a computer, the communication methods provided in embodiments of this application are performed.

An embodiment of this application provides a computer program product. The computer program product includes computer program or instructions. When the computer program or instructions are run on a computer, the communication methods provided in embodiments of this application are performed.

It should be understood that the processor in this embodiment of this application may be a central processing unit (central processing unit, CPU), or the processor may be another general-purpose processor, a digital signal processor (digital signal processor, DSP), or an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor, or the like.

It should be further understood that the memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example rather than limitation, random access memories (random access memory, RAM) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware (circuit), firmware, or any combination thereof. When software is used to implement embodiments, the foregoing embodiments may be all or partially implemented in a form of a computer program product. The computer program product includes one or more computer instructions or computer programs. When the program instructions or the computer programs are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, infrared, radio, and microwave, or the like) manner. The computer-readable storage medium may be any usable medium that can be accessed by the computer, or a data storage device, for example, a server or a data center in which one or more usable media are integrated. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that, the term "and/or" in this specification is merely an association relationship for describing associated objects, and indicates that three relationships may exist. For example, A and/or B may represent the following cases: Only A exists, both A and B exist, and only B exists, where A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof indicates any combination of these items, including a single item (piece) or any combination of a plurality of items (pieces). For example, at least one item (piece) of a, b, or c may indicate a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that the modules (or units) and algorithm steps in the examples described with reference to embodiments disclosed in this specification may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

A person skilled in the art may clearly understand that, for the purpose of convenient and brief description, for a detailed working process of the foregoing system, apparatus, and module (unit), refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely an example. For example, division into the modules (or units) is merely logical functional division and may be other division in an actual implementation. For example, a plurality of modules (or units) or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules (or units) may be implemented in an electronic, mechanical, or another form.

The modules (or units) described as separate parts may or may not be physically separate, and parts displayed as modules (or units) may or may not be physical modules (or units), that is, may be located in one place, or may be distributed on a plurality of network modules (or units). Some or all of the modules (or units) may be selected based on an actual requirement, to achieve the objectives of the solutions of embodiments.

In addition, functional modules (or units) in embodiments of this application may be integrated into one processing module (or unit), or each module (or unit) may exist alone physically, or two or more modules (or units) may be integrated into one module (or unit).

If the function is implemented in a form of a software functional module (or unit) and sold or used as an independent product, the function may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that may store program code such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a relay terminal device, a request message from a remote terminal device, wherein the request message is used to request to communicate with an access network device through the relay terminal device, the request message comprises first slice information, and the first slice information comprises information about a slice that the remote terminal device intends to access;
performing, by the relay terminal device, access control based on the first slice information and second slice information, or performing, by the relay terminal device, access control based on the first slice information and third slice information, wherein the second slice information comprises information about a slice supported by a cell on which the relay terminal device currently camps or a cell that currently serves the relay terminal device, and the third slice information comprises information about a slice supported by the relay terminal device or information about an air interface capability corresponding to the relay terminal device; and
sending, by the relay terminal device, a response message to the remote terminal device.

2. The communication method according to claim 1, wherein the performing, by the relay terminal device, access control based on the first slice information and second slice information comprises: performing, by the relay terminal device, access control based on the first slice information, the second slice information, and the third slice information.

3. The communication method according to claim 1 or 2, wherein the third slice information further comprises information about a slice corresponding to an on-going protocol data unit PDU session of the relay terminal device.

4. The communication method according to claim 1 or 2, wherein the third slice information further comprises information about a slice corresponding to a suspended PDU session of the relay terminal device.

5. The communication method according to any one of claims 1 to 4, wherein the method further comprises:
if the cell on which the relay terminal device currently camps does not support the slice that the remote terminal device intends to access, reselecting, by the relay terminal device, a cell that supports the slice that the remote terminal device intends to access.

6. The communication method according to any one of claims 1 to 4, wherein the method further comprises:
if the cell that currently serves the relay terminal device does not support the slice that the remote terminal device intends to access, sending, by the relay terminal device to the access network device, information that comprises a cell that supports the slice that the remote terminal device intends to access.

7. The communication method according to any one of claims 1 to 6, wherein the method further comprises:
sending, by the relay terminal device, the second slice information and/or the third slice information.

8. The communication method according to any one of claims 1 to 7, wherein the method further comprises:
sending, by the relay terminal device, configuration information of a resource pool corresponding to the second slice information and/or configuration information of a resource pool corresponding to the third slice information.

9. A communication method, comprising:
sending, by a remote terminal device, a request message, wherein the request message is used to request to communicate with an access network device through a relay terminal device, the request message comprises first slice information, and the first slice information comprises information about a slice that the remote terminal device intends to access; and
receiving, by the remote terminal device, a response message from the relay terminal device.

10. The communication method according to claim 9, wherein the method further comprises:
receiving, by the remote terminal device, second slice information and/or third slice information from the relay terminal device, wherein the second slice information comprises information about a slice supported by a cell on which the relay terminal device currently camps or a cell that currently serves the relay terminal device, and the third slice information comprises information about a slice supported by the relay terminal device or information about an air interface capability corresponding to the relay terminal device.

11. The communication method according to claim 10, wherein the third slice information further comprises information about a slice corresponding to an on-going protocol data unit PDU session of the relay terminal device.

12. The communication method according to claim 10, wherein the third slice information further comprises information about a slice corresponding to a suspended PDU session of the relay terminal device.

13. The communication method according to any one of claims 9 to 12, wherein the sending, by a remote terminal device, a request message comprises:
sending, by the remote terminal device, the request message to the relay terminal device with reference to the second slice information and/or the third slice information.

14. A communication apparatus, comprising a transceiver module and a processing module, wherein
the transceiver module is configured to receive a request message from a remote terminal device, wherein the request message is used to request to communicate with an access network device through the communication apparatus, the request message comprises first slice information, and the first slice information comprises information about a slice that the remote terminal device intends to access;
the processing module is configured to: perform access control based on the first slice information and second slice information, or perform access control based on the first slice information and third slice information, wherein the second slice information comprises information about a slice supported by a cell on which the communication apparatus currently camps or a cell that currently serves the communication apparatus, and the third slice information comprises information about a slice supported by the communication apparatus or information about an air interface capability corresponding to the communication apparatus; and
the transceiver module is further configured to send a response message to the remote terminal device.

15. The communication apparatus according to claim 14, wherein
the processing module is further configured to perform access control based on the first slice information, the second slice information, and the third slice information.

16. The communication apparatus according to claim 14 or 15, wherein the third slice information further comprises information about a slice corresponding to an on-going protocol data module PDU session of the communication apparatus.

17. The communication apparatus according to claim 14 or 15, wherein the third slice information further comprises information about a slice corresponding to a suspended PDU session of the communication apparatus.

18. The communication apparatus according to any one of claims 14 to 17, wherein if the cell on which the communication apparatus currently camps does not support the slice that the remote terminal device intends to access, the processing module is further configured to reselect a cell that supports the slice that the remote terminal device intends to access.

19. The communication apparatus according to any one of claims 14 to 17, wherein if the cell that currently serves the communication apparatus does not support the slice that the remote terminal device intends to access, the processing module is further configured to send, to the access network device, information that comprises a cell that supports the slice that the remote terminal device intends to access.

20. The communication apparatus according to any one of claims 14 to 19, wherein
the processing module is further configured to send the second slice information and/or the third slice information.

21. The communication apparatus according to any one of claims 14 to 20, wherein
the processing module is further configured to send configuration information of a resource pool corresponding to the second slice information and/or configuration information of a resource pool corresponding to the third slice information.

22. A communication apparatus, wherein the apparatus comprises a transceiver module and a processing module, wherein
the transceiver module is configured to send a request message, wherein the request message is used to request to communicate with an access network device through a relay terminal device, the request message comprises first slice information, and the first slice information comprises information about a slice that the communication apparatus intends to access; and
the transceiver module is further configured to receive a response message from the relay terminal device.

23. The communication apparatus according to claim 22, wherein
the transceiver module is further configured to receive second slice information and/or third slice information from the relay terminal device, wherein the second slice information comprises information about a slice supported by a cell on which the relay terminal device currently camps or a cell that currently serves the relay terminal device, and the third slice information comprises information about a slice supported by the relay terminal device or information about an air interface capability corresponding to the relay terminal device.

24. The communication apparatus according to claim 23, wherein the third slice information further comprises information about a slice corresponding to an on-going protocol data module PDU session of the relay terminal device.

25. The communication apparatus according to claim 23, wherein the third slice information further comprises information about a slice corresponding to a suspended PDU session of the relay terminal device.

26. The communication apparatus according to any one of claims 22 to 25, wherein
the processing module is further configured to send the request message to the relay terminal device based on the second slice information and/or the third slice information.

27. A communication system, wherein the communication system comprises the communication apparatus according to any one of claims 14 to 21 and the communication apparatus according to any one of claims 22 to 26.

28. A communication apparatus, wherein the communication apparatus comprises a processor, and the processor is coupled to a memory;
the memory is configured to store a computer program; and
the processor is configured to execute the computer program stored in the memory, so that the communication method according to any one of claims 1 to 13 is performed.

29. A computer-readable storage medium, wherein the computer-readable storage medium comprises a computer program or instructions, and when the computer program or the instructions are run on a computer, the communication method according to any one of claims 1 to 13 is performed.

30. A computer program product, wherein the computer program product comprises a computer program or instructions, and when the computer program or the instructions are run on a computer, the communication method according to any one of claims 1 to 13 is performed.
